(19) **Europäisches Patentamt**
**European Patent Office**
**Office européen des brevets**

(11) **EP 4 212 016 B1**

(12) **EUROPEAN PATENT SPECIFICATION**

(45) Date of publication and mention
of the grant of the patent:
**31.07.2024 Bulletin 2024/31**

(21) Application number: **23151860.6**

(22) Date of filing: **17.01.2023**

(51) International Patent Classification (IPC):
**A01K 61/17** *(2017.01)* **A01K 61/90** *(2017.01)*
**A01K 79/00** *(2006.01)*

(52) Cooperative Patent Classification (CPC):
**A01K 61/17; A01K 61/90; A01K 79/00;** Y02A 40/81

(54) **PRECISE REGULATION-AND-CONTROL SYSTEM FOR PROPAGATION OF DRIFTING EGG FISHES**

PRÄZISES REGULIERUNGS- UND STEUERUNGSSYSTEM ZUR AUSBREITUNG VON WANDERFISCHE

SYSTÈME PRÉCIS DE RÉGULATION ET DE RÉGULATION POUR LA PROPAGATION DE POISSONS MIGRATEURS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **18.01.2022 CN 202210057556**

(43) Date of publication of application:
**19.07.2023 Bulletin 2023/29**

(73) Proprietors:
• **China Three Gorges Corporation**
**Wuhan, Hubei 430010 (CN)**
• **HOHAI UNIVERSITY**
**Nanjing, Jiangsu 210098 (CN)**

(72) Inventors:
• **DAI, Huichao**
**WUHAN, 430010 (CN)**
• **MAO, Jingqiao**
**WUHAN, 430010 (CN)**

• **GONG, Yiqing**
**WUHAN, 430010 (CN)**
• **ZHANG, Peipei**
**WUHAN, 430010 (CN)**
• **WANG, Gang**
**WUHAN, 430010 (CN)**
• **DAI, Jie**
**WUHAN, 430010 (CN)**
• **JIANG, Dingguo**
**WUHAN, 430010 (CN)**
• **ZHAO, Hanqing**
**WUHAN, 430010 (CN)**
• **ZHAI, Ran**
**WUHAN, 430010 (CN)**

(74) Representative: **Lavoix**
**Bayerstraße 83**
**80335 München (DE)**

(56) References cited:
**WO-A1-2021/238567** **CN-A- 109 447 848**
**CN-A- 112 502 088** **CN-B- 106 407 671**

**Description**

**TECHNICAL FIELD**

The present invention relates to the field of ecological regulation-and-control for water conservancy areas, in particular to a precise regulation-and-control system for propagation of drifting egg fishes.

**BACKGROUND**

Many large-scale water conservancy and hydropower engineering projects have been built in the Yangtze River, Jin sha River and other basins in China. They have played a huge role in flood control, power generation, irrigation, navigation and other aspects. However, original hydrological conditions of a damming river are changed by damming, spawning grounds originally distributed in a reservoir area have been submerged. Drifting egg fishes need to go up to a river section in the middle of a cascade reservoir to spawn, and meanwhile, the upstream reservoir brings an impact on the water flow and flow velocity of the downstream spawning grounds, which may adversely affect the spawning, hatching, growth and development of aquatic organisms. Some studies have proposed that hydrodynamic conditions for fish spawning can be improved in a reservoir scheduling way to increase the production and propagation of fishes.
CN 109 447 848 A, CN 106 407 671 A, CN 112 502 088 A and WO 2021/238567 A1 disclose methods and systems for propagation of drifting egg fish during the spawning period.
In the prior art, by the cooperation of engineering measures and non-engineering measures, suitable hydrological process conditions are provided for propagation of the drifting egg fishes. However, current fixed measurement schemes commonly used in scheduling in the prior art are unable to cover overall habitat elements of the spawning grounds, and the measurement data cannot support the demand for precise regulation-and-control.
Therefore, by using the above-mentioned method, precise regulation-and-control on the fishes with eggs cannot be achieved.

**SUMMARY**

To this end, embodiments of the present invention as set out in the appended set of claims provide a precise regulation-and-control system and method for propagation of drifting egg fishes, which aim at solving the problem that precise regulation-and-control on the fishes with eggs cannot be achieved.
The present invention provides a precise regulation-and-control system for propagation of drifting egg fishes. This system includes a habitat monitoring component, a fish perception component, an information fusion component and a regulation-and-control component, the habitat monitoring component is connected to the fish perception component, the fish perception component is connected to the information fusion component, and the regulation-and-control component is connected to the information fusion component;

> the habitat monitoring component is configured to acquire habitat factor data of target fishes and transmit the habitat factor data to the fish perception component;

> the fish perception component is configured to acquire target fish information, receive the habitat factor data transmitted by the habitat monitoring component and transmit the target fish information and the habitat factor data to the information fusion component;

> the information fusion component is configured to receive meteorological and hydrological data, the habitat factor data and the target fish information and generate an environmental biological fusion data set according to the meteorological and hydrological data, the habitat factor data and the target fish information;

> the information fusion component is further configured to determine, according to the environmental biological fusion data set, spawning grounds for the target fishes to spawn, and determine a start date when the target fishes start to spawn and a first day-to-day water temperature change rate of each spawning ground within a preset period of time starting from the start date; and

> the regulation-and-control component is configured to generate a precise data set for migration regulation-and-control and a precise regulation-and-control parameter set for stimulative spawning regulation-and-control according to the start date and the first day-to-day water temperature change rate of each spawning ground within the preset period of time starting from the start date; generate a first precise regulation-and-control parameter and a second precise regulation-and-control parameter of a reservoir gate according to the precise data set for migration regulation-and-

and-control and the precise regulation-and-control parameter set for stimulative spawning regulation-and-control; and after the target fishes spawn, generate, according to spawning situations of the target fishes, a precise regulation-and-control scheme meeting a fish-egg hatching condition.

According to the precise regulation-and-control system for propagation of the drifting egg fishes provided in the embodiment of the present application, the habitat factor data of the target fishes is acquired by the habitat monitoring component, and thus, the accuracy of the acquired habitat factor data of the target fishes can be guaranteed. The target fish information is acquired by the fish perception component, and thus, the accuracy of the acquired target fish information can be guaranteed. The received meteorological and hydrological data, habitat factor data and target fish information are fused by the information fusion component to generate the environmental biological fusion data set, and thus, the accuracy of the generated environmental biological fusion data set is guaranteed. The spawning grounds for the target fishes to spawn are determined according to the environmental biological fusion data set, and the start date when the target fishes start to spawn and the first day-to-day water temperature change rate of each spawning ground within the preset period of time starting from the start date are determined. The precise data set for migration regulation-and-control and the precise regulation-and-control parameter set for stimulative spawning regulation-and-control are generated according to the start date and the first day-to-day water temperature change rate of each spawning ground within the preset period of time starting from the start date, and thus, the accuracy of each of the generated precise data set for migration regulation-and-control and precise regulation-and-control parameter set for stimulative spawning regulation-and-control is guaranteed. The first precise regulation-and-control parameter and the second precise regulation-and-control parameter of the reservoir gate are respectively generated according to the precise data set for migration regulation-and-control and the precise regulation-and-control parameter set for stimulative spawning regulation-and-control. After the target fishes spawn, a precise regulation-and-control scheme meeting a fish-egg hatching condition is generated according to spawning situations of the target fishes. Thus, first precise regulation-and-control parameters and second precise regulation-and-control parameters for refining the reservoir gate can be generated on the basis of the precise data set for migration regulation-and-control and the precise regulation-and-control parameter set for stimulative spawning regulation-and-control according to a demand on the propagation of the target fishes, and precise regulation-and-control for the migration and spawning processes of the target fishes is achieved by controlling the reservoir gate. Moreover, after the target fishes spawn, a precise regulation-and-control method meeting a fish-egg hatching condition is generated. Therefore, by adopting this method, precise regulation-and-control for the migration process, the spawning process and the fish-egg hatching process of the target fishes can be achieved, and various habitat demands for the propagation of the drifting egg fishes can be sufficiently satisfied.

According to the claimed invention, the step of generating an environmental biological fusion data set according to the meteorological and hydrological data, the habitat factor data and the target fish information includes:

Spatial interpolation is performed on the meteorological and hydrological data and the habitat factor data which are discretely distributed to obtain an environmental data set in spatial and temporal continuous distribution within a spawning area.

A relationship between the target fish information and the environmental data set is established according to the environmental data set to generate the environmental biological fusion data set.

According to the precise regulation-and-control system for propagation of the drifting egg fishes provided in the embodiment of the present application, spatial interpolation is performed on the meteorological and hydrological data and the habitat factor data which are discretely distributed to obtain the environmental data set in spatial and temporal continuous distribution within the spawning area. Then, the meteorological and hydrological data and the habitat factor data can be combined to obtain the environmental data set in spatial and temporal continuous distribution within the spawning area, so that the acquired environmental data set corresponding to the target fishes is more accurate, thereby facilitating regulation and control according to the environmental data set corresponding to the target fishes. Furthermore, the relationship between the target fish information and the environmental data set is established according to the environmental data set to generate the environmental biological fusion data set. Thus, the target fish information can be combined with the environmental data set, so that the precise regulation-and-control system for propagation of the drifting egg fishes can acquire target fish information under various environmental data to generate the environmental biological fusion data set. It is convenient for the precise regulation-and-control system for propagation of the drifting egg fishes to precisely regulate and control the migration process, the spawning process and the fish-egg hatching process of the target fishes according to the environmental biological fusion data set to sufficiently meet various habitat demands for propagation of the drifting egg fishes.

According to the claimed invention, the step of determining, according to the environmental biological fusion data set, spawning grounds for the target fishes to spawn includes:

The environmental biological fusion data set is parsed, whether a phenomenon that the number of the target fishes is continuously increasing occurs stably at all geographic positions within a preset time is determined, each of the spawning grounds is determined in combination with a topography of each of the geographic positions, and each of the spawning grounds is marked.

According to the precise regulation-and-control system for propagation of the drifting egg fishes provided in the embodiment of the present application, the environmental biological fusion data set is parsed, it is determined whether a phenomenon that the number of the target fishes is continuously increasing occurs stably at all geographic positions within a preset time. Each of the spawning grounds is determined in combination with a topography of each of the geographic positions, and each of the spawning grounds is marked, so that the accuracy of the determined spawning ground can be guaranteed. Then, the spawning process of the target fishes in each of the spawning grounds can be precisely regulated and controlled according to the environmental biological fusion data set corresponding to each of the spawning grounds.

According to the claimed invention, the step of determining a start date when the target fishes start to spawn and a first day-to-day water temperature change rate of each spawning ground within a preset period of time starting from the start date includes:

A daily change curve of a distribution number of the target fishes in each of the spawning grounds is fitted according to the environmental biological fusion data set.

An inflexion time point corresponding to the daily change curve is determined according to the daily change curve, and according to the inflexion time point and developmental situations of the target fishes, the start date when the target fishes start to spawn is determined.

The water temperature, air temperature, water area, water volume, inflow heat flux and outflow heat flux of each of the spawning grounds are acquired according to the environmental biological fusion data set, and the first day-to-day water temperature change rate of each spawning ground within the preset period of time starting from the start date is calculated.

According to the precise regulation-and-control system for propagation of the drifting egg fishes provided in the embodiment of the present application, the daily change curve of the distribution number of the target fishes in each of the spawning grounds is fitted according to the environmental biological fusion data set, and thus, the accuracy of the fitted daily change curve of the distribution number of the target fishes in each of the spawning grounds can be guaranteed. The inflexion time point corresponding to the daily change curve is determined according to the daily change curve, the start date when the target fishes start to spawn is determined according to the inflexion time point and developmental situations of the target fishes, and thus, the accuracy of the determined start date when the target fishes start to spawn can be guaranteed. Higher accuracy can be achieved when the migration process, the spawning process and the fish-egg hatching process of the target fishes in each of the spawning grounds are regulated and controlled according to the start date of the target fishes start to spawn. Furthermore, according to the precise regulation-and-control system for propagation of the drifting egg fishes, the water temperature, air temperature, water area, water volume, inflow heat flux and outflow heat flux of each of the spawning grounds are acquired according to the environmental biological fusion data set, the first day-to-day water temperature change rate of each spawning ground within the preset period of time starting from the start date is calculated, and thus, the accuracy of the calculated first day-to-day water temperature change rate can be guaranteed, and higher accuracy can be achieved when the migration process, the spawning process and the fish-egg hatching process of the target fishes in each of the spawning grounds are regulated and controlled according to the first day-to-day water temperature change rate.

According to the claimed invention, the step of generating a precise data set for migration regulation-and-control according to the start date and the first day-to-day water temperature change rate of each spawning ground within the preset period of time starting from the start date includes:

Multiple sets of alternative migration regulation-and-control schemes are generated based on the condition that a preset requirement is satisfied according to the start date and the first day-to-day water temperature change rate.

The precise data set for migration regulation-and-control is determined from the multiple sets of alternative migration regulation-and-control schemes according to a preset migration requirement.

According to the precise regulation-and-control system for propagation of the drifting egg fishes provided in the embodiment of the present application, the multiple sets of alternative migration regulation-and-control schemes are generated according to the start date and the first day-to-day water temperature change rate based on the condition that a preset requirement is satisfied. The precise data set for migration regulation-and-control is determined from the multiple sets of alternative migration regulation-and-control schemes according to the preset migration requirement, so that the accuracy of the determined precise data set for migration regulation-and-control can be guaranteed, and then, the accuracy of regulating and controlling the reservoir gate according to the precise data set for migration regulation-and-control is guaranteed.

According to the claimed invention, the step of generating a precise regulation-and-control parameter set for stimulative spawning regulation-and-control according to the start date and the first day-to-day water temperature change rate of each spawning ground within the preset period of time starting from the start date includes:

According to the start date and the first day-to-day water temperature change rate, multiple sets of alternative spawning regulation-and-control schemes are generated based on the condition that a preset requirement is satisfied.

The precise regulation-and-control parameter set for stimulative spawning regulation-and-control is determined from the multiple sets of alternative spawning regulation-and-control schemes according to a preset spawning requirement.

According to the precise regulation-and-control system for propagation of the drifting egg fishes provided in the embodiment of the present application, the multiple sets of alternative spawning regulation-and-control schemes are generated according to the start date and the first day-to-day water temperature change rate based on the condition that a preset requirement is satisfied. The precise regulation-and-control parameter set for stimulative spawning regulation-and-control is determined from the multiple sets of alternative spawning regulation-and-control schemes according to a preset spawning requirement, so that the accuracy of the determined precise regulation-and-control parameter set for stimulative spawning regulation-and-control can be guaranteed, and then, the accuracy of regulating and controlling the reservoir gate according to the precise regulation-and-control parameter set for stimulative spawning regulation-and-control is guaranteed.

In a further aspect, the regulation-and-control component is further configured to acquire the decrease number of the target fishes in each of the spawning grounds after a flood peak; determine, according to the decrease number of the target fishes in each of the spawning grounds, whether a first preset number of target fishes in each of the spawning grounds spawn successfully; and if the number of the spawning grounds in which the first preset number of target fishes spawn successfully is less than or equal to a second preset number, generate a second regulation-and-control scheme.

According to the precise regulation-and-control system for propagation of the drifting egg fishes provided in the embodiment of the present application, the decrease number of the target fishes in each of the spawning grounds after the flood peak is acquired. It is determined, according to the decrease number of the target fishes in each of the spawning grounds, whether the first preset number of target fishes in each of the spawning grounds spawn successfully. Thus, a spawning condition of the target fishes in each of the spawning grounds can be accurately determined. If the first preset number of target fishes in each of the spawning grounds spawn successfully, it is determined that the target fishes in this spawning ground spawn successfully. If the spawning grounds in which the first preset number of target fishes is less than or equal to the second preset number, the second regulation-and-control scheme is generated. That is, if the number of the spawning grounds in which the target fishes spawn successfully is less than or equal to the second preset number, the second regulation-and-control scheme is generated, and thus, it is ensured that the target fishes in each of the spawning grounds can spawn successfully.

In this further aspect, the step of generating a second regulation-and-control scheme includes:

A target regulation-and-control data set is generated according to the precise regulation-and-control parameter set for stimulative spawning regulation-and-control.

The spawning grounds in which the first preset number of target fishes spawn successfully are removed, and the remaining spawning grounds are acquired.

A second day-to-day water temperature change rate is calculated corresponding to each of the remaining spawning grounds within the preset period of time starting from the start date.

A third precise regulation-and-control parameter of the reservoir gate is generated according to the target regulation-and-control data set and the second day-to-day water temperature change rate.

According to the precise regulation-and-control system for propagation of the drifting egg fishes provided in the embodiment of the present application, the target regulation-and-control data set is generated according to the precise regulation-and-control parameter set for stimulative spawning regulation-and-control, and thus, the accuracy of the target regulation-and-control data set can be guaranteed, and the target regulation-and-control data set does not greatly differ from the precise regulation-and-control parameter set for stimulative spawning regulation-and-control. The spawning grounds in which the first preset number of target fishes spawn successfully are removed, the remaining spawning grounds are acquired, the second day-to-day water temperature change rate corresponding to each of the remaining spawning grounds within the preset period of time starting from the start date is calculated, the third precise regulation-and-control parameter of the reservoir gate is generated according to the target regulation-and-control data set and the second day-to-day water temperature change rate, and thus, the accuracy of spawning stimulation for the target fishes in the remaining spawning grounds can be guaranteed.

In still a further aspect, the habitat monitoring component includes multiple sets of measuring units, each set of the measuring units includes an underwater vehicle, a propeller, a positioning system, a temperature probe, a water level probe and a data and charging module; in which

the underwater vehicle is equipped with a battery as a power source and is internally provided with a storage chip for temporarily storing measured data;
the propeller is configured to provide kinetic energy for the underwater vehicle to cruise and hover underwater;
the positioning system is configured to perform device positioning and navigation;
the temperature probe is configured to measure a temperature of a water body;
the water level probe is configured to measure water depth data; and

the data and charging module is configured to upload the measured data and be connected to a charging power supply.

According to the precise regulation-and-control system for propagation of the drifting egg fishes provided in the embodiment of the present application, the habitat monitoring component includes the multiple sets of measuring units, each set of the measuring units includes the underwater vehicle, the propeller, the positioning system, the temperature probe, the water level probe and the data and charging module, and thus, the accuracy of the habitat factor data acquired by the habitat monitoring component can be guaranteed.

In still a further aspect, the fish perception component includes multiple sets of fixed monitoring units, each set of fixed monitoring units includes an anchoring apparatus, a power supply apparatus, a data and power supply module, a first photographing apparatus, a second photographing apparatus and a probe; in which

the anchoring apparatus is configured to anchor the fixed monitoring units;
the power supply apparatus is configured to supply power to a device;
the data and power supply module is configured to receive the habitat factor data uploaded by the measuring units in the habitat monitoring component, supply power to each of the measuring units and upload the habitat factor data and the target fish information to the information fusion component;
the first photographing apparatus and the second photographing apparatus are respectively configured to monitor daytime and nighttime underwater high-definition images; and
the probe is configured to detect a density of the target fishes in a surrounding water body.

According to the precise regulation-and-control system for propagation of the drifting egg fishes provided in the embodiment of the present application, the fish perception component includes the multiple sets of fixed monitoring units, each set of fixed monitoring units includes the anchoring apparatus, the power supply apparatus, the data and power supply module, the first photographing apparatus, the second photographing apparatus and the probe, and thus, the accuracy of the target fish information acquired by the fish perception component can be guaranteed.

## BRIEF DESCRIPTION OF THE DRAWINGS

In order to more clearly describe specific implementations in the present invention or technical schemes in the prior art, the accompanying drawings required for describing the specific implementations or the prior art will be briefly introduced below. Apparently, the accompanying drawings in the following description show only some implementations of the present invention, and those of ordinary skill in the art may still derive other accompanying drawings from these accompanying drawings without creative efforts.

Fig. 1 is a structural diagram of a precise regulation-and-control system for propagation of drifting egg fishes according to an embodiment of the present invention;

Fig. 2 is a structural diagram of a precise regulation-and-control system for propagation of drifting egg fishes according to another embodiment of the present invention;

Fig. 3 is a structural diagram of a habitat monitoring component according to an embodiment of the present invention;

Fig. 4 is a structural diagram of a fish perception component according to an embodiment of the present invention;

Fig. 5 is a process diagram of a regulation-and-control method for a precise regulation-and-control system for propagation of drifting egg fishes according to an embodiment of the present invention;

Fig. 6 is a schematic diagram showing the distribution of basin recognized spawning grounds according to an embodiment of the present invention;

Fig. 7 is a process diagram of a regulation-and-control method for a precise regulation-and-control system for propagation of drifting egg fishes according to an embodiment of the present invention;

Fig. 8 is a process diagram of a regulation-and-control method for a precise regulation-and-control system for propagation of drifting egg fishes according to an embodiment of the present invention;

Fig. 9 is a diagram showing temperature comparison before and after a basin control reservoir is constructed according to an embodiment of the present invention;

Fig. 10 shows water temperature prediction results of parts of spawning grounds in a basin according to an embodiment of the present invention;

Fig. 11 shows a precise discharge flow regulation-and-control process for propagation of drifting egg fishes according to an embodiment of the present invention; and

Fig. 12 is a schematic diagram showing a hardware structure of an electronic device according to an embodiment of the present invention;

in which:

Habitat monitoring component 1;

Fish perception component 2;

Information fusion component 3;

Regulation-and-control component 4;

Underwater vehicle 11;

Propeller 12;

Positioning system 13;

Temperature probe 14;

Water level probe 15;

Data and charging module 16;

Anchoring apparatus 21;

Power supply apparatus 22;

Data and power supply module 23;

First photographing apparatus 24;

Second photographing apparatus 25;

Probe 26;

Habitat factor module 31;

Fish information module 32;

Meteorological and hydrological module 33;

Data fusion module 34;

Migration regulation-and-control module 41;

Spawning regulation-and-control module 42;

Hatching regulation-and-control module 43; and

Gate cooperative control module 44.

## DETAILED DESCRIPTION

In order to make objectives, technical schemes and advantages of the embodiments of the present invention clearer, the technical schemes in the embodiments of the present invention will be described clearly and completely below in conjunction with the accompanying drawings in the embodiments of the present invention. Apparently, the described embodiments are a part of the embodiments of the present invention, not all the embodiments.

In the description of the present invention, it should be noted that directional or positional relationships indicated by terms such as "center", "upper", "lower", "left", "right", "vertical", "horizontal", "inner" and "outer" are based on directional or positional relationships as shown in the accompanying drawings, and are only for the purposes of facilitating describing the present invention and simplifying the description, rather than indicating or implying that the referred apparatus or element has to have a specific direction or be constructed and operated in the specific direction, and therefore, they cannot be regarded as limitations on the present invention. Furthermore, terms "first", "second" and "third" are only for descriptive purposes, and cannot be understood as indicating or implying the relative importance.

In the description of the present invention, it should be noted that, unless explicitly specified and defined otherwise, terms "mounted", "connection" and "connected" are to be understood in a broad sense, for example, connection may be fixed connection or detachable connection, or integral connection, may be mechanical connection or electrical connection, may be direct connection or indirect connection via an intermediate medium, may be internal communication of two elements, and may be wireless connection or wired connection. For those of ordinary skill in the art, the specific meanings of the above-mentioned terms in the present invention may be understood according to specific situations.

In the description of the present invention, it should be noted that the term "and/and/or" used in the specification of the present application and the appended claims refers to any combinations and all possible combinations of one or more listed associated items and includes these combinations.

Furthermore, the technical characteristics involved in the different implementations of the present invention described as below may be combined with each other without conflicts.

In order to make objectives, technical schemes and advantages of the embodiments of the present invention clearer, the technical schemes in the embodiments of the present invention will be described clearly and completely below in conjunction with the accompanying drawings in the embodiments of the present invention. Apparently, the described embodiments are a part of the embodiments of the present invention, not all the embodiments.

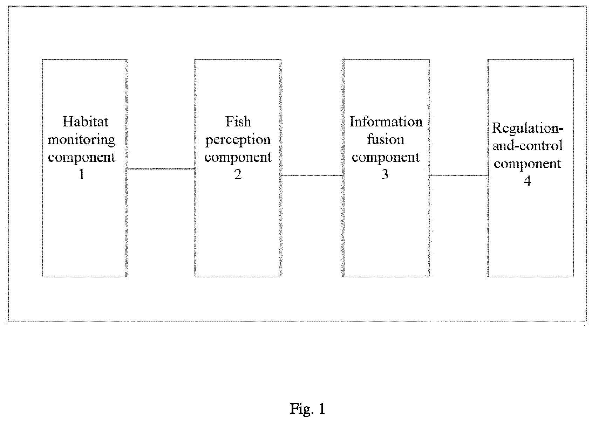

In an embodiment of the present application, as shown in Fig. 1, a precise regulation-and-control system for propagation of the drifting egg fishes is provided. This system includes a habitat monitoring component 1, a fish perception component 2, an information fusion component 3 and a regulation-and-control component 4, in which the habitat monitoring component 1 is connected to the fish perception component 2, the fish perception component 2 is connected to the information fusion component 3, and the regulation-and-control component 4 is connected to the information fusion component 3; and

the habitat monitoring component 1 is configured to acquire habitat factor data of target fishes and transmit the habitat factor data to the fish perception component 2.

The target fish may be at least one drifting egg fish, and the drifting egg fish may be at least one of fishes in the following table.

Table 1 List of drifting egg fishes

| Family | Species | Family | Species |
|---|---|---|---|
| Cyprinidae | Black carp | Cyprinidae | Xenophysogobio boulengeri |
| Cyprinidae | Grass carp | Cyprinidae | Xenophysogobio nudicorpa |
| Cyprinidae | Silver carp | Cobitidae | Botia reevesae |
| Cyprinidae | Variegated carp | Cobitidae | Parabotia bimaculata |
| Cyprinidae | Coreius heterodon | Cobitidae | Leptobotia elongata |
| Cyprinidae | Coreius guichenoti | Cobitidae | Leptobotia microphthalma |
| Cyprinidae | Haliotis cylindrica | Cobitidae | Leptobotia rubrilabris |
| Cyprinidae | Rhinogobio ventralis | Balitoridae | Jinshaia.abbreviata |
| Cyprinidae | Gobiobotia abbreviata | Balitoridae | Jinshaia sinensis |

Specifically, the habitat monitoring component 1 may include a plurality of sensor components and a communication component, the habitat monitoring component 1 may acquire the habitat factor data of the target fishes by virtue of the plurality of sensor components and transmit the habitat factor data to the fish perception component 2 by virtue of the communication component. The habitat factor data may include positional information as well as information about a water temperature, a water level, etc. corresponding to each position.

The fish perception component 2 is configured to acquire target fish information, receive the habitat factor data transmitted by the habitat monitoring component 1 and transmit the target fish information and the habitat factor data to the information fusion component 3.

Specifically, the fish perception component 2 may include a plurality of photographing components and perception components and a communication component, the photographing components may acquire images of the target fishes, and the perception components may acquire perception data of the target fishes, then, the target fish information is generated according to the images of the target fishes and the perception data of the target fishes, and the communication component is utilized to transmit the target fish information to the information fusion component 3.

The information fusion component 3 is configured to receive meteorological and hydrological data, the habitat factor data and the target fish information and generate an environmental biological fusion data set according to the meteorological and hydrological data, the habitat factor data and the target fish information.

The information fusion component 3 is configured to determine, according to the environmental biological fusion data set, spawning grounds for the target fishes to spawn, and determine a start date when the target fishes start to spawn and a first day-to-day water temperature change rate of each spawning ground within a preset period of time starting from the start date.

Specifically, the information fusion component 3 may perform data processing on the received meteorological and hydrological data, habitat factor data and target fish information. The processed data is fused to generate the environmental biological fusion data set. The information fusion component 3 determines, according to the environmental biological fusion data set, spawning grounds for the target fishes to spawn, and determine a start date when the target fishes start to spawn and a first day-to-day water temperature change rate of each spawning ground within a preset period of time starting from the start date.

The regulation-and-control component 4 is configured to generate a precise data set for migration regulation-and-control and a precise regulation-and-control parameter set for stimulative spawning regulation-and-control according to the start date and the first day-to-day water temperature change rate of each spawning ground within the preset period of time starting from the start date; respectively generate a first precise regulation-and-control parameter and a second precise regulation-and-control parameter of a reservoir gate according to the precise data set for migration regulation-and-control and the precise regulation-and-control parameter set for stimulative spawning regulation-and-control; and after the target fishes spawn, generate, according to spawning situations of the target fishes, a precise regulation-and-control scheme meeting a fish-egg hatching condition.

Specifically, the regulation-and-control component 4 generates a precise data set for migration regulation-and-control and a precise regulation-and-control parameter set for stimulative spawning regulation-and-control according to the start date, the first day-to-day water temperature change rate of each spawning ground within the preset period of time starting from the start date and environmental information of each of the spawning grounds; respectively generates a first precise regulation-and-control parameter and a second precise regulation-and-control parameter of a reservoir gate according to the precise data set for migration regulation-and-control and the precise regulation-and-control parameter set for stimulative spawning regulation-and-control; and precisely regulates and controls migration and spawning processes of the target fishes according to the first precise regulation-and-control parameter and the second precise regulation-and-control parameter. After the target fishes spawn, a precise regulation-and-control scheme meeting a fish-egg hatching condition is generated according to spawning situations of the target fishes.

According to the precise regulation-and-control system for propagation of the drifting egg fishes provided in the embodiment of the present application, the habitat factor data of the target fishes is acquired by the habitat monitoring component 1, and thus, the accuracy of the acquired habitat factor data of the target fishes can be guaranteed. The target fish information is acquired by the fish perception component 2, and thus, the accuracy of the acquired target fish information can be guaranteed. The received meteorological and hydrological data, habitat factor data and target fish information are fused by the information fusion component 3 to generate the environmental biological fusion data set, and thus, the accuracy of the generated environmental biological fusion data set is guaranteed. The spawning grounds for the target fishes to spawn are determined according to the environmental biological fusion data set, and the start date when the target fishes start to spawn and the first day-to-day water temperature change rate of each spawning ground within the preset period of time starting from the start date are determined. The precise data set for migration regulation-and-control and the precise regulation-and-control parameter set for stimulative spawning regulation-and-control are generated according to the start date and the first day-to-day water temperature change rate of each spawning ground within the preset period of time starting from the start date, and thus, the accuracy of each of the generated precise data set for migration regulation-and-control and precise regulation-and-control parameter set for stimulative spawning regulation-and-control is guaranteed. The first precise regulation-and-control parameter and the second precise regulation-and-control parameter of the reservoir gate are respectively generated according to the precise data set for migration regulation-and-control and the precise regulation-and-control parameter set for stimulative spawning regulation-and-control. After the target fishes spawn, a precise regulation-and-control scheme meeting a fish-egg hatching condition is generated according to spawning situations of the target fishes. Thus, first precise regulation-and-control parameters and second precise regulation-and-control parameters for refining the reservoir gate can be generated on the basis of the precise data set for migration regulation-and-control and the precise regulation-and-control parameter set for stimulative spawning regulation-and-control according to a demand on the propagation of the target fishes, and precise regulation-and-control for the migration and spawning processes of the target fishes is achieved by controlling the reservoir gate. Moreover, after the target fishes spawn, a precise regulation-and-control method meeting a fish-egg hatching condition is generated. Therefore, by adopting this method, precise regulation-and-control for the migration process, the spawning process and the fish-egg hatching process of the target fishes can be achieved, and various habitat demands for the propagation of the drifting egg fishes can be sufficiently sanctified.

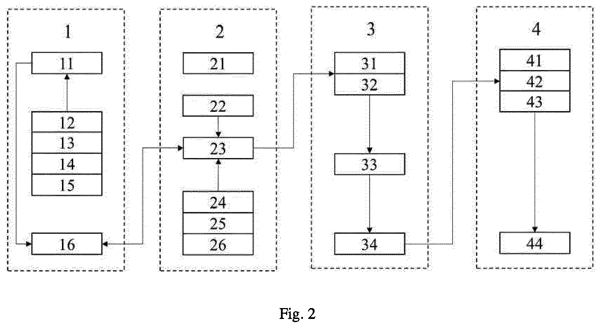

In an optional implementation of the present application, as shown in Fig. 2, the habitat monitoring component 1 includes multiple sets of measuring units, and each set of the measuring units includes an underwater vehicle 11, a propeller 12, a positioning system 13, a temperature probe 14, a water level probe 15 and a data and charging module 16. The underwater vehicle 11 is equipped with a battery as a power source and is internally provided with a storage chip for temporarily storing measured data. The propeller 12 is configured to provide kinetic energy for the underwater vehicle 11 to cruise and hover underwater. The positioning system 13 is configured to perform device positioning and navigation. The temperature probe 14 is configured to measure a temperature of a water body. The water level probe 15 is configured to measure water depth data. The data and charging module 16 is configured to upload the measured data and is connected to a charging power supply.

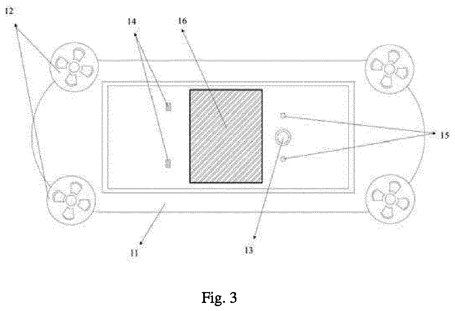

The measuring units may be movable measuring units or fixed measuring units. The propeller 12 may be a vector propeller or a motor propeller, and in the embodiment of the present application, the propeller 12 is not specifically limited. The positioning system 13 may be an ultra-short baseline (USBL) positioning system or a GPS, and in the embodiment of the present application, the positioning system 13 is not specifically limited. The temperature probe 14 may be an ultrasonic temperature probe or a non-ultrasonic temperature probe. The water level probe 15 may be an ultrasonic water level probe or a non-ultrasonic water level probe. Exemplarily, a schematic structural diagram of the movable measuring units in the habitat monitoring component 1 is shown in Fig. 3.

As shown in Fig. 2, the fish perception component 2 includes multiple sets of fixed monitoring units, and each set of units includes an anchoring apparatus 21, a power supply apparatus 22, a data and power supply module 23, a first photographing apparatus 24, a second photographing apparatus 25 and a probe 26. The anchoring apparatus 21 is configured to anchor the fixed monitoring units. The power supply apparatus 22 is configured to supply power to a device. The data and power supply module 23 is configured to receive the habitat factor data uploaded by the measuring units in the habitat monitoring component 1, supply power to each of the measuring units and upload the habitat factor data and the target fish information to the information fusion component 3. The first photographing apparatus 24 and the second photographing apparatus 25 are respectively configured to monitor daytime and nighttime underwater high-definition images. The probe 26 is configured to detect a density of the target fishes in a surrounding water body.

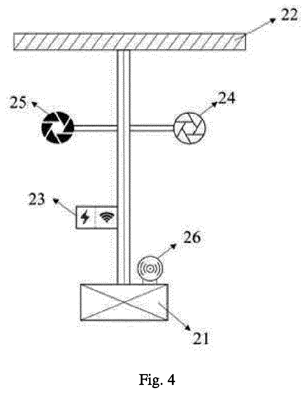

The power supply apparatus 22 may be a solar battery and may also be a lithium battery or other batteries. The first photographing apparatus 24 may be a high-definition digital camera or other photographing apparatuses. The second photographing apparatus 25 may be a near-infrared digital camera or other photographing apparatuses. The probe may be a multi-frequency ultrasonic probe or other probes. In the embodiment of the present application, the types of above-mentioned components are not specifically limited. Exemplarily, a schematic structural diagram of the fixed measuring units in the fish perception component 2 is shown in Fig. 4.

As shown in Fig. 2, the information fusion component includes a habitat factor module 31, a fish information module 32, a meteorological and hydrological module 33 and a data fusion module 34. The habitat factor module 31 is configured to process the habitat factor data of the target fishes. The fish information module 32 is configured to recognize the target fishes and acquire distribution information such as the density and number of the target fishes. The meteorological and hydrological module 33 is configured to receive forecast data from a meteorological station and a hydrometric station and generate meteorological and hydrological data. The data fusion module 34 is configured to fuse the habitat factor data, the target fish information and the meteorological and hydrological data, and construct the environmental biological fusion data set, thereby providing the data set for the precise regulation-and-control. The data fusion module 34 is further configured to determine, according to the environmental biological fusion data set, the spawning grounds for the target fishes to spawn, and determine the start date when the target fishes start to spawn and the first day-to-day water temperature change rate of each spawning ground within the preset period of time starting from the start date.

As shown in Fig. 2, the regulation-and-control component 4 is configured to formulate and implement a precise regulation-and-control scheme for natural propagation of the target fishes and includes a migration regulation-and-control module 41, a spawning regulation-and-control module 42, a hatching regulation-and-control module 43 and a gate cooperative control module 44. The migration regulation-and-control module 41 is configured to formulate a precise regulation-and-control scheme suitable for the target fishes to migrate to a spawning area. The spawning regulation-and-control module 42 is configured to formulate a precise regulation-and-control scheme for stimulating parent fishes to spawn. The hatching regulation-and-control module 43 is configured to formulate a precise regulation-and-control scheme for meeting hatching conditions of drifting fish-eggs. The gate cooperative control module 44 is configured to achieve the cooperation between a load of a unit and an opening of the gate.

In an optional implementation of the present application, at a post-spawning regulation-and-control stage, the gate cooperative control module 44 is configured to achieve the precise implementation of the regulation-and-control scheme, is composed of a hydraulic gate hoist, a control core PLC, a control server and a power station AGC unit and is used to achieve the cooperation between the load of the unit and the opening of the gate, and a working process thereof is described as follows: the control core PLC is connected to the control server according to the migration regulation-and-control scheme, the spawning regulation-and-control scheme and the hatching regulation-and-control scheme issued by a central control room, dynamic distribution for the load is achieved in a total load process of the unit by using an equal incremental algorithm, a distribution scheme is issued to the control core PLC, the control core PLC performs scale conversion according to stroke data of the hydraulic hoist, and the hydraulic gate hoist is controlled to achieve the regulation of the opening. During operation, the control core PLC performs A/D conversion and digital filtering to obtain an actual pressure value of the system and performs continuous monitoring for the opening of the gate. The habitat monitoring component 1 monitors flow velocity, water level and flow information of a spawning water area, performs comparison with the precise regulation-and-control parameter set and feeds comparison data back to the control server. The control server performs space-time inversion operation on a flow to generate a load and opening regulation-and-control scheme, and the control core PLC operates the hydraulic gate hoist to finely adjust a delivery flow process to form closed-loop control.

According to the precise regulation-and-control system for propagation of the drifting egg fishes provided in the embodiment of the present application, the habitat monitoring component 1 includes the multiple sets of measuring units, each set of the measuring units includes the underwater vehicle 11, the propeller 12, the positioning system 13, the temperature probe 14, the water level probe 15 and the data and charging module 16, and thus, the accuracy of the habitat factor data acquired by the habitat monitoring component can be ensured. The fish perception component 2 includes the multiple sets of fixed monitoring units, each set of the units includes the anchoring apparatus 21, the power supply apparatus 22, the data and power supply module 23, the first photographing apparatus 24, the second photographing apparatus 25 and the probe 26, and thus, the accuracy of the target fish information acquired by the fish perception component 2 can be guaranteed.

In an optional implementation of the present application, the habitat monitoring component 1 and the fish perception component 2 perform information acquisition on a spawning area for the target fishes, which specifically includes the following contents:

(1) Device layout: with the habitat monitoring component 1 including a plurality of movable measuring units as an example, the precise regulation-and-control system for propagation of the drifting egg fishes may determine a position corresponding to each of the movable measuring units according to a spawning water area for the fishes for the drifting fish-eggs, which is coverable for each of the movable measuring units, i.e. the spawning area for the target fishes. The precise regulation-and-control system for propagation of the drifting egg fishes plans a three-dimensional cruise line for each of the movable measuring units by adopting a rapid random tree (RRT) algorithm according to an underwater topography of the area covered by each of the movable measuring units. The cruise line between the adjacent movable measuring units is provided with preset overlapping point positions for data check and transfer, in which the preset overlapping point positions may be 5-10 overlapping point positions or 10-20 overlapping point positions.

The multiple sets of fixed monitoring units in the fish perception component 2 are used for monitoring a migration condition of the target fishes on a key section and providing data and charging service for the movable measuring units, and the key section is distributed in historical spawning grounds and river channels with special shapes such as bent river channels, bifurcated river channels and rock-spur river channels.

(2) Information collection: the habitat monitoring component 1 and the fish perception component 2 begin to collect the habitat factor data and the target fish information in the spawning area within a period of time before a historical spawning period of the target fishes. The underwater vehicle 11 intermittently performs a hover mode for data collection in a cruise process, and the propeller 12 records an output thrust and power data $M1(F, W)$. The positioning system 13 records position and time information $M2(x, y, z, t)$ for positioning and navigating the underwater vehicle 11, fixed-distance transmission time $M3(L0, T0)$ recorded by the ultrasonic temperature probe 14 and upper and lower echo transmission time $M4(T1, T2)$ recorded by the ultrasonic water level probe 15. The first photographing component 24 and the second photographing component 25 respectively acquires daytime and nighttime underwater high-definition images M5 and M6; and the probe 26 records a complex-frequency ultrasonic echo signal M7.

(3) Device networking: an uplink communication network among the habitat monitoring component 1, the fish perception component 2 and the information fusion component 3 and a power network between each of the movable measuring units and each of the fixed measuring units are constructed. A LoRa protocol is used to construct a star topology network for connecting a plurality of data and charging modules 16 (terminals) to a single data and power supply module 23 (center node) so as to be used for small-scale data transmission, and a center node polling way is adopted for data communication with an adaptive transmission rate. A 5G communication scheme is used to achieve real-time large-scale data communication between the data and power supply module 23 (center node) and the information fusion component 3, and a Lempel-Ziv-Welch (LZW) compression algorithm is adopted for lossless compression transmission of the high-definition images. A near-field RF wireless charging technology is used to construct a wireless power network for the data and charging module 16 and the data and power supply module 23, a magnetic suction interface is adopted for connection among the modules to ensure that the charging distance is within 5 cm and the effective transmission power is 30 W or above.

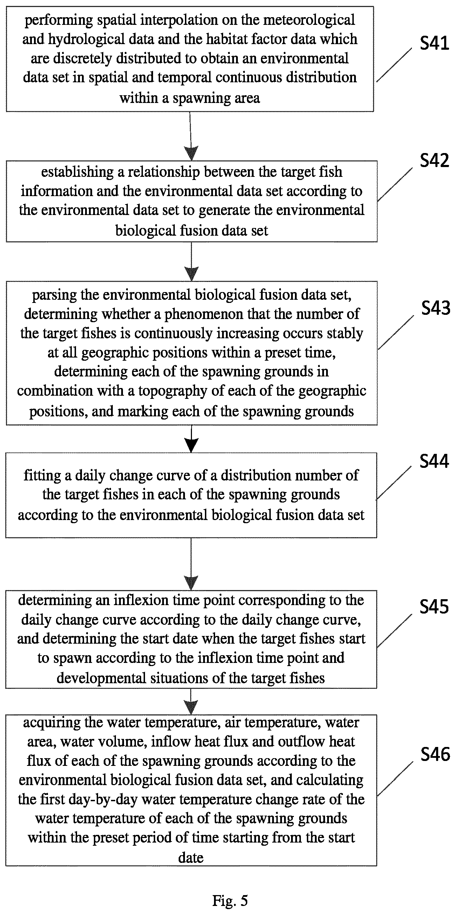

In an optional implementation of the present application, as shown in Fig. 5, the information fusion component 3 generates the environmental biological fusion data set according to the meteorological and hydrological data, the habitat factor data and the target fish information; determines, according to the environmental biological fusion data set, the spawning grounds for the target fishes to spawn, and determines the start date when the target fishes start to spawn and the first day-to-day water temperature change rate of each spawning ground within the preset period of time starting from the start date, which specifically includes the following steps:

S41 Spatial interpolation is performed on the meteorological and hydrological data and the habitat factor data which are discretely distributed to obtain an environmental data set in spatial and temporal continuous distribution within a spawning area.

S42 A relationship between the target fish information and the environmental data set is established according to the environmental data set to generate the environmental biological fusion data set.

S43 The environmental biological fusion data set is parsed, it is determined whether a phenomenon that the number of the target fishes is continuously increasing occurs stably at all geographic positions within a preset time, each of the spawning grounds is determined in combination with a topography of each of the geographic positions, and each of the spawning grounds is marked.

S44 A daily change curve of a distribution number of the target fishes in each of the spawning grounds is fitted according to the environmental biological fusion data set.

S45 An inflexion time point corresponding to the daily change curve is determined according to the daily change curve, and the start date when the target fishes start to spawn is determined according to the inflexion time point and developmental situations of the target fishes.

S46 The water temperature, air temperature, water area, water volume, inflow heat flux and outflow heat flux of each of the spawning grounds are acquired according to the environmental biological fusion data set, and the first day-to-day water temperature change rate of each spawning ground within the preset period of time starting from the start date is calculated.

Specifically, before spatial interpolation is performed on the meteorological and hydrological data and the habitat factor data which are discretely distributed to obtain the environmental data set in spatial and temporal continuous distribution within the spawning area, the information fusion component 3 needs to perform data check and data preprocessing on the habitat factor data and the target fish information.

In an optional implementation of the present application, the data check process may be described as follows: The information fusion component 3 constructs a trusted contact among devices on the basis of a coordinated trust model, extracts sampling data on overlapping point positions of adjacent measuring units, performs data sequence alignment by using a continuous wavelet transform (CWT) method and performs data trust assignment according to a coincidence degree of waveform parameters. A median filtering method is adopted to eliminate accidental errors in a data sequence and isolated noise points in the images and determine the data trust assignment according to the data sequence or a noise rate of pixels of the images. During data communication, a cyclic redundancy code is adopted to check a channel attenuation value and environmental noise interference and determine a communication trust value among nodes. Data of which a data trust value and a communication trust value do not reach the standard is filtered, and precise data samples are generated for subsequent analysis.

In an optional implementation of the present application, a process that the information fusion component 3 performs data processing on the received habitat factor data may be described as follows:

The information fusion component 3 may deduce a sectional flow Q according to a flow velocity $V_1$, a water temperature W and a water level Z on a hover point of the underwater vehicle 11, the information fusion component 3 may calculate a flow velocity of a water flow according to a power formula $V_1$=P/F, P and F are respectively output power data and a thrust recorded by the propeller 12. The information fusion component 3 may calculate a fixed-distance ultrasonic transmission rate $V_2$=L0/T0 according to the fixed-distance transmission time recorded by the temperature probe 14 and determine the water temperature W according to corresponding curves of the water temperature and an ultrasonic sound velocity. The water level is the sum of a water depth and an elevation of a riverbed, i.e. Z=L0×(T1+T2)/(2×T0)+G. Then, integral calculation is performed on the sectional flow Q by using a Delaunay triangulation algorithm in combination with the flow velocity and the water level, so that the information fusion component 3 may acquire information such as the sectional flow Q, the flow velocity $V_1$ of the water flow, the fixed-distance ultrasonic transmission rate $V_2$, the water level Z and the water temperature W.

In an optional implementation of the present application, a process that the information fusion component 3 performs data processing on the received target fish information may be described as follows:

The information fusion component 3 may perform image processing on the daytime and nighttime underwater high-definition images by using a convolutional neural network, recognize the number, advancing direction and body length information of the target fishes in the images, convert a volume of an imaged water body according to an imaging distance and a field angle of a camera, and determine a density F1 of the target fishes in the images.

Specifically, the density F1 of the target fishes may be calculated according to the following formula:

$$F1 = \frac{\pi L^3 tan\theta^2}{3nf} \tag{1}$$

wherein nf is the number of the target fishes in the images, and L is the imaging distance, and $\theta$ is the field angle.

By segmentation with the fixed monitoring units as nodes, the net flux of the target fishes in each section is counted, and the number F2 of the target fishes in each section of water area is calculated. The ultrasonic echo signal is decomposed by adopting three-layer wavelet transform, an amplitude of the ultrasonic echo signal in a corresponding frequency domain is obtained by fast Fourier transform, an attenuation coefficient F3 at each frequency is obtained, and a data regression model G1 for F1 and F3 is established, and the higher the decrease speed of the attenuation coefficient F3 at each frequency is, the higher the density of the target fishes, and therefore, the precise regulation-and-control system for propagation of the drifting egg fishes can determine the density of the target fishes according to the attenuation coefficient F3 at each frequency.

After data check and data preprocessing are performed on the habitat factor data and the target fish information, the information fusion component 3 may perform information fusion on the meteorological and hydrological data, the habitat factor data and the target fish information.

Specifically, the information fusion component 3 receives the meteorological and hydrological data transmitted by a meteorological station and a hydrological station in a spawning basin, and the meteorological and hydrological data includes hydrometeorological point position data such as trunk and tributary flows, an air temperature and dissolved oxygen in a water body. The information fusion component 3 performs spatial interpolation on the meteorological and hydrological data and the habitat factor data in a spawning water area, which are discretely distributed, to obtain an environmental data set in spatial and temporal continuous distribution within a spawning area. A geographically weighted regression (GWR) model is used to establish a relationship between the target fish information and the environmental data set to establish the environmental biological fusion data set.

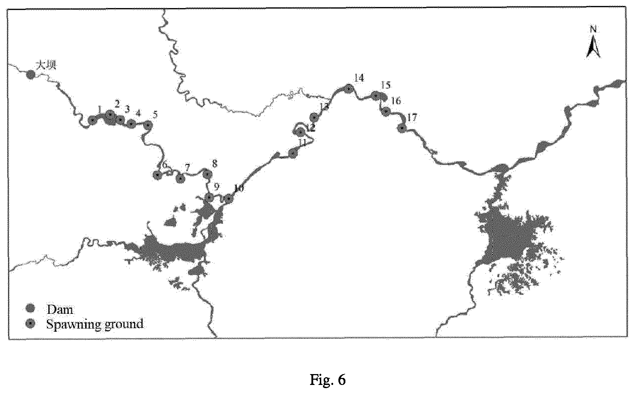

The information fusion component 3 parses the environmental biological fusion data set by using K-means clustering, determines whether a phenomenon that the number of the target fishes is continuously increasing occurs stably in each of the spawning grounds within a period of time, recognizes bent, bifurcated and rock-spur channel sections in combination with an underwater topography in each section and performs numeration according to an order from an upstream to a downstream. Exemplary, as shown in Fig. 6 which is a schematic diagram showing the distribution of basin recognized spawning grounds.

The information fusion component 3 extracts the daily distribution number of the target fishes from the environmental biological fusion data set, fits a daily change curve of a distribution number of the target fishes in each of the spawning grounds by using a logistic growth model, determines an inflexion time point corresponding to the daily change curve, and determines the start date when the target fishes start to spawn in combination with developmental situations of the target fishes; and calculates the water temperature before and after the start date, extracts water temperature data of a trunk and tributaries on the upstream, meteorological data of a basin and the habitat factor data from the environmental biological fusion data set, obtains a heat flux $\Psi$ of a hydro-pneumatic interface according to the water temperature and the air temperature, and calculates the first day-to-day water temperature change rate of each spawning ground within the preset period of time starting from the start date by using a method described as follows:

$$\rho c_p V_f \frac{dW}{dt} = A_f \Psi + \rho c_p \left( \sum_i Q_i W_i^{\ in} - QW^{\ out} \right) \qquad (2)$$

wherein $\rho$ is a density of a water body, $c_p$ is a specific heat capacity of water, W is a water temperature of each of the spawning grounds, dW/dt is a first day-to-day water temperature change rate of a spawning ground to be solved, $A_f$ is the area of a water area of each of the spawning grounds, $V_f$ is a volume of a water body in each of the spawning grounds, and QiWi$^{in}$ and QiWi$^{out}$ are respectively an inflow heat flux and an outflow heat flux. A period when the water temperature satisfies a fish spawning demand is selected as a window period when spawning is regulated and controlled, and regulation and control performed before the window period mainly aim at meeting the migration of the target fishes.

According to the precise regulation-and-control system for propagation of the drifting egg fishes provided in the embodiment of the present application, spatial interpolation is performed on the meteorological and hydrological data and the habitat factor data which are discretely distributed to obtain the environmental data set in spatial and temporal continuous distribution within the spawning area, and then, the meteorological and hydrological data and the habitat factor data can be combined to obtain the environmental data set in spatial and temporal continuous distribution within the spawning area, so that the acquired environmental data set corresponding to the target fishes is more accurate, thereby facilitating regulation and control according to the environmental data set corresponding to the target fishes. Furthermore, the relationship between the target fish information and the environmental data set is established according to the environmental data set to generate the environmental biological fusion data set. Thus, the target fish information can be combined with the environmental data set, so that the precise regulation-and-control system for propagation of the drifting egg fishes can acquire target fish information under various environmental data to generate the environmental biological fusion data set.

According to the precise regulation-and-control system for propagation of the drifting egg fishes, the environmental biological fusion data set is parsed, it is determined whether a phenomenon that the number of the target fishes is continuously increasing occurs stably at all geographic positions within a preset time. Each of the spawning grounds is determined in combination with a topography of each of the geographic positions, and each of the spawning grounds is marked, so that the accuracy of the determined spawning ground can be guaranteed, then, the spawning process of the target fishes in each of the spawning grounds can be precisely regulated and controlled according to the environmental biological fusion data set corresponding to each of the spawning grounds, and various habitat demands for propagation of the drifting egg fishes can be sufficiently satisfied.

Furthermore, according to the precise regulation-and-control system for propagation of the drifting egg fishes, the daily change curve of the distribution number of the target fishes in each of the spawning grounds is fitted according to the environmental biological fusion data set, and thus, the accuracy of the fitted daily change curve of the distribution number of the target fishes in each of the spawning grounds can be guaranteed. The inflexion time point corresponding to the daily change curve is determined according to the daily change curve, the start date when the target fishes start to spawn is determined according to the inflexion time point and developmental situations of the target fishes, and thus, the accuracy of the determined start date when the target fishes start to spawn can be guaranteed. Higher accuracy can be achieved when the migration process, the spawning process and the fish-egg hatching process of the target fishes in each of the spawning grounds are regulated and controlled according to the start date of the target fishes start to spawn. Furthermore, according to the precise regulation-and-control system for propagation of the drifting egg fishes, the water temperature, air temperature, water area, water volume, inflow heat flux and outflow heat flux of each of the spawning grounds are acquired according to the environmental biological fusion data set, the first day-to-day water temperature change rate of each spawning ground within the preset period of time starting from the start date is calculated, and thus, the accuracy of the calculated first day-to-day water temperature change rate can be guaranteed, and higher accuracy can be achieved when the migration process, the spawning process and the fish-egg hatching process of the target fishes in each of the spawning grounds are regulated and controlled according to the first day-to-day water temperature change rate.

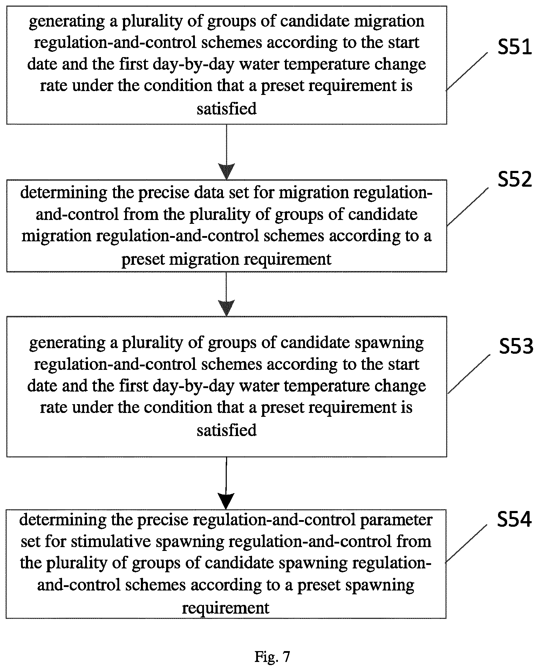

In an optional implementation of the present application, as shown in Fig. 7, the regulation-and-control component 4 generates the precise data set for migration regulation-and-control according to the start date and the first day-to-day water temperature change rate of each spawning ground within the preset period of time starting from the start date and generates the precise regulation-and-control parameter set for stimulative spawning regulation-and-control according to the start date and the first day-to-day water temperature change rate of each spawning ground within the preset period of time starting from the start date, which mainly includes the following steps:

S51 Multiple sets of alternative migration regulation-and-control schemes are generated according to the start date and the first day-to-day water temperature change rate based on the condition that a preset requirement is satisfied.

S52 The precise data set for migration regulation-and-control is determined from the multiple sets of alternative migration regulation-and-control schemes according to a preset migration requirement.

S53 Multiple sets of alternative spawning regulation-and-control schemes are generated according to the start date and the first day-to-day water temperature change rate based on the condition that a preset requirement is satisfied.

S54 The precise regulation-and-control parameter set for stimulative spawning regulation-and-control is determined from the multiple sets of alternative spawning regulation-and-control schemes according to a preset spawning requirement.

The regulation-and-control component 4 may includes a migration regulation-and-control module 41, a spawning regulation-and-control module 42, a hatching regulation-and-control module 43 and a gate cooperative control module 44.
Specifically, the migration regulation-and-control module 41 of the regulation-and-control component 4 may generate the precise data set for migration regulation-and-control according to characteristics of breeding migration of the target fishes, the start date when the target fishes start to spawn and the first day-to-day water temperature change rate of each spawning ground within the preset period of time starting from the start date to provide flow velocity reference conditions for keeping a migration river channel stable and moderate and avoid excessive physical exhaustion of the target fishes during migration. The precise data set for migration regulation-and-control includes three key index ranges of a Reynolds number, Froude number and flow velocity gradient of a river channel suitable for migration of the target fishes.
The spawning regulation-and-control module 42 of the regulation-and-control component 4 may generate the precise regulation-and-control parameter set for stimulative spawning regulation-and-control according to the position and topographic characteristics of each of the spawning grounds, the start date when the target fishes start to spawn and the first day-to-day water temperature change rate of each spawning ground within the preset period of time starting from the start date to provide precise stimulative spawning reference conditions including an initial water temperature, a daily water temperature variation amplitude, an appropriate water temperature maintenance time, an initial water level, a daily water level rise, an initial flow, a daily flow increase, an initial mean flow velocity, a daily increase of a mean flow velocity, a duration of water level rise, an interval of a flood peak process and a water level difference in a flood peak process within a regulation-and-control period of each of the spawning grounds. The weight coefficients for regulating and controlling each of the spawning grounds are allocated according to the number of the target fishes in each of the spawning grounds. Exemplarily, as shown in table 2:

Table 2 Spawning Regulation-and-Control Parameters for Parts of Spawning Grounds

| Parameter / Spawning ground | Spawning ground #1 | Spawning ground #2 | Spawning ground #3 | Spawning ground #4 | Spawning ground #5 |
|---|---|---|---|---|---|
| Initial Water Temperature (Degree Centigrade) | 23.2 | 23.4 | 23.2 | 23.8 | 23.3 |
| Daily Water Temperature Variation Amplitude (Degree Centigrade) | 0.3 | 0.4 | 0.3 | 0.2 | 0.3 |
| Appropriate Water Temperature Maintenance Time (H) | 74 | 75 | 95 | 89 | 95 |
| Initial Water Level (m) | 65.40 | 64.77 | 64.68 | 63.52 | 63.02 |
| Daily Water Level Rise (m) | 0.38 | 0.42 | 0.37 | 0.41 | 0.37 |
| Initial Flow (m3/s) | 19257 | 19434 | 18957 | 19134 | 19517 |
| Daily Flow Increase (m3/s) | 3430 | 3761 | 3334 | 3171 | 3615 |
| Initial Mean Flow Velocity (m/s) | 0.49 | 0.50 | 0.51 | 0.42 | 0.58 |
| Daily Increase of Mean Flow Velocity (m/s) | 0.18 | 0.08 | 0.02 | 0.18 | 0.19 |
| Duration of Water Level Rise (H) | 81 | 89 | 87 | 88 | 91 |
| Interval of Flood Peak Process (H) | 21 | 23 | 22 | 22 | 23 |
| Water Level Difference in Flood Peak Process (m) | 1.2 | 1.4 | 1.5 | 1.3 | 1.4 |
| Weight Coefficient | 4.8% | 6.1% | 4.6% | 3.8% | 6.4% |

Specifically, the migration regulation-and-control module 41 and the spawning regulation-and-control module 42 formulate multiple sets of alternative migration regulation-and-control schemes and alternative spawning regulation-and-control schemes within a range from an upper basic scheduling line and a lower basic scheduling line meeting a flood control requirement and a normal operation requirement of an upstream reservoir. A one-dimensional Saint-Venant equation set is established to concurrently solve the flow velocity, water level and flow data of each of the spawning grounds in each scheme:

$$\frac{\partial z}{\partial t} + \frac{1}{b}\frac{\partial Q_i}{\partial x} = q(x,t)$$

(3)

$$\frac{1}{g}\left(\frac{\partial v}{\partial t} + v\frac{\partial v}{\partial x}\right) + \frac{\partial z}{\partial x} = J_x$$

(4)

wherein z is a water level of each of the spawning grounds, b is a width of each of the spawning grounds, v is a flow velocity of each of the spawning grounds, q(x,t) is a loss of underground water and evapotranspiration water except runoff, g is a gravitational acceleration, and $J_x$ is a hydraulic slope of each of the spawning grounds.

A regulation-and-control goal of the migration regulation-and-control module 41 is to guarantee the maximum power generation capacity while maintaining a stable migration habitat, and a target function is shown as follows:

$$K = \max\sum K1_j ds_j$$

(5)

$$E = \max\sum Ndt$$

(6)

wherein $K1_j$ is a satisfaction rate of the $j^{th}$ section of migratory river channel to the precise data set K1 for migration regulation-and-control, a length of the river channel is $s_j$, and a calculation method is to process a time sequence of the calculated Reynolds number, Froude number and flow velocity gradient in each scheme by adopting normal distribution, take a mean value ±3 times as much as a variance as a coincidence rate between a section and a proposed range of the precise data set K1 for migration regulation-and-control, accumulate the coincidence rates of the three indexes to form the satisfaction rate and accumulate the satisfaction rates $K1_j$ of all the sections to form a total satisfaction rate K of a regulation-and-control period. N is generation power of a power station, and E is a total power generation capacity within the regulation-and-control period. The maximum target function selected from the multiple sets of alternative migration regulation-and-control schemes is used as a target migration regulation-and-control scheme, and the precise data set for migration regulation-and-control is determined.

The spawning regulation-and-control module 42 uses a pulse flood peak to stimulate the target fishes to spawn, the goal of water scheduling is consistent with the goal of power generation capacity scheduling, and therefore, the maximum satisfaction rate is only used as the target function:

$$K = max\sum \phi_j K2_j$$

(7)

Habitat indexes calculated according to each flow scheme are compared with 12 regulation-and-control indexes in a data set of the precise regulation-and-control parameter set K2 for stimulative spawning regulation-and-control, the satisfaction rate exceeding the regulation-and-control indexes is 1, the satisfaction rate not reaching the regulation-and-control indexes is expressed by a percentage, the satisfaction rates of the indexes of the habitat factor data of single spawning ground are summated one by one $K2_j = \sum_1^{12} K2_i$. The maximum target function selected from each of the multiple sets of alternative spawning regulation-and-control schemes is used as a target spawning regulation-and-control scheme, and the regulation-and-control parameter set for stimulative spawning regulation-and-control is determined.

After the precise data set for migration regulation-and-control and the precise regulation-and-control parameter set for stimulative spawning regulation-and-control are determined, the regulation-and-control component 4 may respectively generate a first precise regulation-and-control parameter and a second precise regulation-and-control parameter of a reservoir gate according to the precise data set for migration regulation-and-control and the precise regulation-and-control parameter set for stimulative spawning regulation-and-control. The first precise regulation-and-control parameter may include a migration discharge flow regulation-and-control parameter, and the second precise regulation-and-control parameter may include a spawning discharge flow regulation-and-control parameter.

Specifically, the regulation-and-control component 4 determines the migration discharge flow regulation-and-control parameter according to the precise data set for migration regulation-and-control, and the gate cooperative control module 44 decomposes a discharge flow to a plurality of gates on the basis of a dynamic regulation mechanism for a load of a unit according to the migration discharge flow regulation-and-control parameter, cooperatively allocates openings of the gates to accurately discharge a set flow into a downstream river channel within a scheduling period, and reserves a unit capacity and a gate margin for feedback regulation, thereby guaranteeing the stability of the unit operating under high-intensity peak regulation and frequency regulation tasks.

The regulation-and-control component 4 determines the spawning discharge flow regulation-and-control parameter according to the precise regulation-and-control parameter set for stimulative spawning regulation-and-control, and the gate cooperative control module 44 decomposes a discharge flow to a plurality of gates on the basis of a dynamic regulation mechanism for a load of a unit according to the spawning discharge flow regulation-and-control parameter, cooperatively allocates openings of the gates to accurately discharge a set flow into a downstream river channel within a scheduling period, and reserves a unit capacity and a gate margin for feedback regulation, thereby guaranteeing the stability of the unit operating under high-intensity peak regulation and frequency regulation tasks.

According to the precise regulation-and-control system for propagation of the drifting egg fishes provided in the embodiment of the present application, the multiple sets of alternative migration regulation-and-control schemes are generated according to the start date and the first day-to-day water temperature change rate based on the condition that a preset requirement is satisfied. The precise data set for migration regulation-and-control is determined from the multiple sets of alternative migration regulation-and-control schemes according to the preset migration requirement, so that the accuracy of the determined precise data set for migration regulation-and-control can be guaranteed, and then, the accuracy of regulating and controlling the reservoir gate according to the precise data set for migration regulation-and-control is guaranteed. Furthermore, the multiple sets of alternative spawning regulation-and-control schemes are generated according to the start date and the first day-to-day water temperature change rate based on the condition that a preset requirement is satisfied. The precise regulation-and-control parameter set for stimulative spawning regulation-and-control is determined from the multiple sets of alternative spawning regulation-and-control schemes according to a preset spawning requirement, so that the accuracy of the determined precise regulation-and-control parameter set for stimulative spawning regulation-and-control can be guaranteed, and then, the accuracy of regulating and controlling the reservoir gate according to the precise regulation-and-control parameter set for stimulative spawning regulation-and-control is guaranteed.

In an optional implementation of the present application, the regulation-and-control component 4 is further configured to acquire the decrease number of the target fishes in each of the spawning grounds after a flood peak; determine, according to the decrease number of the target fishes in each of the spawning grounds, whether a first preset number of target fishes in each of the spawning grounds spawn successfully; and if the number of the spawning grounds in which the first preset number of target fishes spawn successfully is less than or equal to a second preset number, generate a second regulation-and-control scheme.

Specifically, the information fusion component 3 updates the number of the target fishes in each of the spawning grounds after the flood peak and updates the data regression model for the density of the target fishes and the ultrasonic echo attenuation coefficient after the flood peak, inverts the decrease of the ultrasonic echo attenuation coefficient caused by the distribution of fish-eggs or juvenile fishes by using an intelligent algorithm and establishes a corresponding relationship $F5=\alpha\log\Delta G+\beta$ between the density of the fish-eggs (juvenile fishes) and a parameter variable $\Delta G$ of the regression model, wherein $\alpha$ and $\beta$ are fitting parameters. Thus, the regulation-and-control component 4 may acquire the decrease number of the target fishes in each of the spawning grounds after the flood peak and the increase of the density of the fish-eggs in each of the spawning grounds.

The regulation-and-control component 4 determines, according to the decrease number of the target fishes in each of the spawning grounds after the flood peak and the increase of the density of the fish-eggs in each of the spawning grounds, whether the first preset number of target fishes in each of the spawning grounds spawn successfully.

Optionally, the regulation-and-control component 4 may determine whether the density of the fish-eggs in each of the spawning grounds is continuously increased, determine whether the decrease number of the target fishes in each of the spawning grounds after the flood peak is greater than a preset threshold, and determine whether the first preset number of target fishes in each of the spawning grounds spawn successfully.

Exemplarily, if it is monitored on the downstream of each of the spawning grounds that the density of the fish-eggs is continuously increased, and the number F4 of the target fishes in each of the spawning grounds after the flood peak is 30% less than the number F2 of the target fishes before spawning, i.e. F4/F2 < 0.3, that is, the decrease number of the target fishes in each of the spawning grounds after the flood peak is greater than 70%, it proves that most of the target fishes in this spawning ground have completed spawning and left the spawning ground. The regulation-and-control component 4 determines that the first preset number of target fishes in each of the spawning grounds spawn successfully. The first preset number may be 70% or 80%, and in the embodiment of the present application, the first preset number is not specifically limited.

The regulation-and-control component 4 determines that the number of the spawning grounds in which the first preset number of target fishes spawn successfully is less than or equal to the second preset number.

Exemplarily, the regulation-and-control component 4 may count a proportion W of the spawning grounds in which the first preset number of target fishes spawn successfully to the total spawning grounds. If W≤0.8, the spawning regulation-and-control module 42 is called to formulate the second regulation-and-control scheme; and if W>0.8, the hatching regulation-and-control module 43 is called to formulate a fish-egg hatching regulation-and-control scheme.

According to the precise regulation-and-control system for propagation of the drifting egg fishes provided in the embodiment of the present application, the decrease number of the target fishes in each of the spawning grounds after the flood peak is acquired. It is determined, according to the decrease number of the target fishes in each of the spawning grounds, whether the first preset number of target fishes in each of the spawning grounds spawn successfully. Thus, a spawning condition of the target fishes in each of the spawning grounds can be accurately determined. If the first preset number of target fishes in each of the spawning grounds spawn successfully, it is determined that the target fishes in this spawning ground spawn successfully. If the spawning grounds in which the first preset number of target fishes is less than or equal to the second preset number, the second regulation-and-control scheme is generated. That is, if the number of the spawning grounds in which the target fishes spawn successfully is less than or equal to the second preset number, the second regulation-and-control scheme is generated, and thus, it is ensured that the target fishes in each of the spawning grounds can spawn successfully.

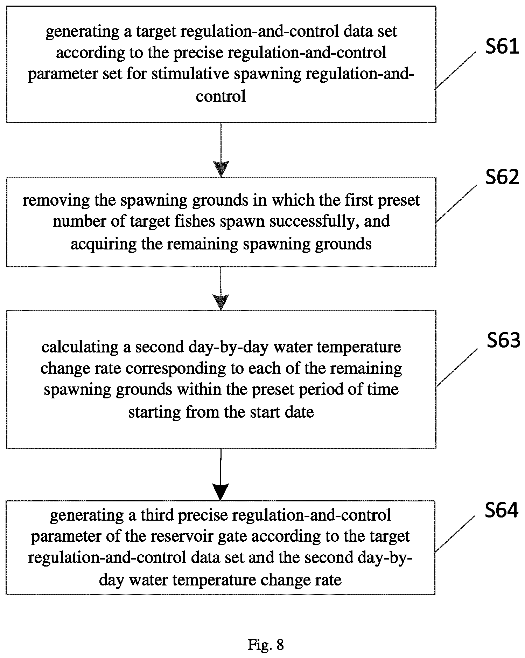

In an optional implementation of the present application, as shown in Fig. 8, the above-mentioned regulation-and-control component 4 generates the second regulation-and-control scheme, which includes:

S61 A target regulation-and-control data set is generated according to the precise regulation-and-control parameter set for stimulative spawning regulation-and-control.

S62 The spawning grounds in which the first preset number of target fishes spawn successfully are removed, and the remaining spawning grounds are acquired.

S63 A second day-to-day water temperature change rate corresponding to each of the remaining spawning grounds within the preset period of time starting from the start date is calculated.

S64 A third precise regulation-and-control parameter of the reservoir gate is generated according to the target regulation-and-control data set and the second day-to-day water temperature change rate.

Specifically, the spawning regulation-and-control module 42 in the regulation-and-control component 4 may generate the target regulation-and-control data set according to the precise regulation-and-control parameter set for stimulative spawning regulation-and-control.

Optionally, the spawning regulation-and-control module 42 may adaptively regulate the precise regulation-and-control parameter set for stimulative spawning regulation-and-control upwards or downwards to generate the target regulation-and-control data set.

Exemplarily, the spawning regulation-and-control module 42 may increase a value of the precise regulation-and-control parameter set for stimulative spawning regulation-and-control by 5-15%.

The spawning grounds in which the first preset number of target fishes spawn successfully are removed, and the remaining spawning grounds are acquired. The second day-to-day water temperature change rate corresponding to each of the remaining spawning grounds within the preset period of time starting from the start date is calculated by using a method which is the same as that in the above-mentioned embodiment. The third precise regulation-and-control parameter of the reservoir gate is generated according to the target regulation-and-control data set and the second day-to-day water temperature change rate. The gate cooperative control module 44 decomposes a discharge flow to a plurality of gates on the basis of a dynamic regulation mechanism for a load of a unit according to the third precise regulation-and-control parameter of the reservoir gate, cooperatively allocates openings of the gates to accurately discharge a set flow into a downstream river channel within a scheduling period, and reserves a unit capacity and a gate margin for emergency control, thereby guaranteeing the stability of the unit operating under high-intensity peak regulation and frequency regulation tasks.

The gate cooperative control module 44 is configured to achieve the precise implementation of the regulation-and-control scheme, is composed of a hydraulic gate hoist, a control core PLC, a control server and a power station AGC unit and is used to achieve the cooperation between the load of the unit and the opening of the gate, and a working process thereof is described as follows: the control core PLC is connected to the control server according to the migration regulation-and-control scheme, the spawning regulation-and-control scheme and the hatching regulation-and-control scheme issued by a central control room, dynamic distribution for the load is achieved in a total load process of the unit by using an equal incremental algorithm, a distribution scheme is issued to the control core PLC, the control core PLC performs scale conversion according to stroke data of the hydraulic hoist, and the hydraulic gate hoist is controlled to achieve the regulation of the opening. During operation, the control core PLC performs A/D conversion and digital filtering to obtain an actual pressure value of the system and performs continuous monitoring for the opening of the gate; and the habitat monitoring component 1 monitors flow velocity, water level and flow information of a spawning water area, performs comparison with the precise regulation-and-control parameter set and feeds comparison data back to the control server. The control server performs space-time inversion operation on a flow to generate a load and opening regulation-and-control scheme, and the control core PLC operates the hydraulic gate hoist to finely adjust a delivery flow process to form closed-loop control.

After the target fishes in all the spawning grounds complete spawning, the spawning regulation-and-control module 42 formulates a flow velocity scheme for guaranteeing the smooth development of the drifting fish-eggs and brings the flow velocity suitable for the development of the fish-eggs into the one-dimensional Saint-Venant equation set to invert the discharge flow process of a reservoir.

According to the precise regulation-and-control system for propagation of the drifting egg fishes provided in the embodiment of the present application, the target regulation-and-control data set is generated according to the precise regulation-and-control parameter set for stimulative spawning regulation-and-control, and thus, the accuracy of the target regulation-and-control data set can be guaranteed, and the target regulation-and-control data set does not greatly differ from the precise regulation-and-control parameter set for stimulative spawning regulation-and-control. The spawning grounds in which the first preset number of target fishes spawn successfully are removed, the remaining spawning grounds are acquired. The second day-to-day water temperature change rate corresponding to each of the remaining spawning grounds within the preset period of time starting from the start date is calculated. The third precise regulation-and-control parameter of the reservoir gate is generated according to the target regulation-and-control data set and the second day-to-day water temperature change rate, and thus, the accuracy of spawning stimulation for the target fishes in the remaining spawning grounds can be guaranteed.

In order to more clearly understand the precise regulation-and-control system for propagation of the drifting egg fishes in an embodiment of the present application, the embodiment of the present application will be introduced in detail with specific embodiments.

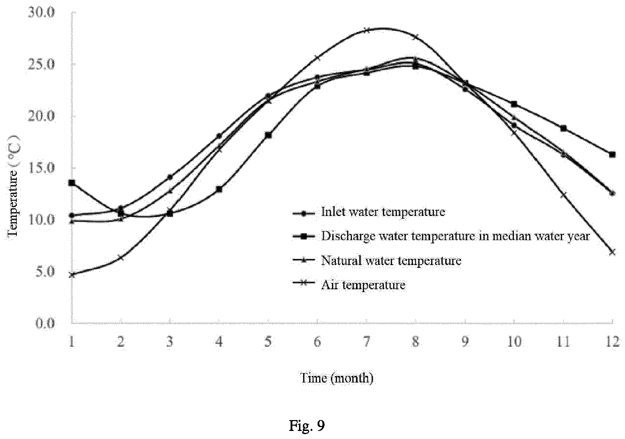

After a control reservoir on a river is constructed, a hydrological regime and a water temperature change obviously, which will affect the propagation of fishes, and therefore, spawning and propagation processes of the target fishes need to be precisely regulated and controlled, as shown in Fig. 9 which is a diagram showing temperature comparison before and after a basin control reservoir is constructed.

In an embodiment of the present application, dominant species of drifting fish-eggs on June to July are taken as the target fishes, the precise regulation-and-control work in the embodiment begins on May 1st, multiple sets of movable measuring units and fixed measuring units are disposed to cover an entire spawning area, and device networking is performed. A rapid search random tree (RRT) algorithm is used to plan cruise lines for underwater device units in the movable measuring units. The underwater vehicle 11 performs six cruising missions every day and night, with each cruising lasting for 90-120 minutes. A hover mode is performed once every 3 minutes for data acquisition, and collects thrust and power data output by the vector propeller 12, positions and time information recorded by the ultra-short baseline (USBL) positioning system 13, fixed-distance transmission time recorded by the ultrasonic temperature probe 14 and upper and lower echo transmission time recorded by the ultrasonic water level probe 15. A high-definition digital camera is used for acquiring a daytime underwater image, a near-infrared digital camera is used for collecting a nighttime underwater image, and a multi-frequency ultrasonic probe is used for recording a complex-frequency ultrasonic echo signal.

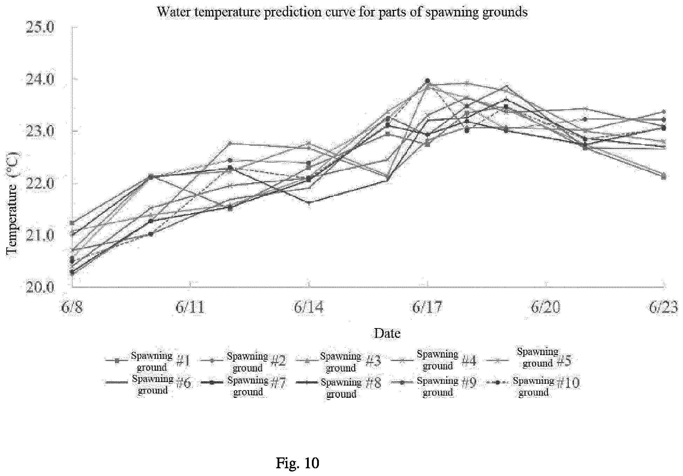

For real-time data, the information fusion component 3 counts 17 historical spawning grounds and potential spawning grounds in total and numbers the area of each spawning ground in an order from the upstream to the downstream according to the topographic characteristics, and analyzes the number of parent fishes by using a logistic growth model, and predicts in combination with developmental situations of fishes that the date D1 when the target fishes start to spawn is June 14th. The meteorological and hydrological module in the information fusion component 3 collects temperature forecasts from a meteorological station and a hydrological station and water temperature data of a trunk stream and tributary streams on the upstream of a basin on the estimated spawning date in June, and calculates a water temperature change trend of each spawning ground. Water temperature dates calculated according to parts of the spawning grounds are listed in Fig. 10, and a window period from June 17th to June 20th when a water temperature reaches an appropriate temperature is selected as a positioning regulation-and-control period of a high-temperature window period.

Before the window period, the migration regulation-and-control module 41 in the regulation-and-control component 4 creates a Reynolds number, Froude number and flow velocity gradient suitable for migration of the target fishes. The spawning regulation-and-control module 42 in the regulation-and-control component 4 implements a regulation-and-control scheme for stimulative spawning and generates the precise regulation-and-control parameter set for stimulative spawning regulation-and-control in parts of the spawning grounds within the window period. A flow scheme optimization is implemented within a section from an upper basic scheduling line to a lower basic scheduling line required by flood control and normal operation of an upstream reservoir. After a spawning regulation-and-control scheme is implemented, the fish information module in the information fusion component 3 analyzes a spawning situation and fish-egg density of the target fishes after a flood peak. Results show that only 6 downstream fixed monitoring units in the 17 spawning grounds have detected that drifting fish-eggs are significantly increased, and the number of the parent fishes in the spawning grounds has decreased to 30% or below before the flood peak. Therefore, the water temperature window period is recalculated, a secondary flood peak is implemented to stimulate other 11 spawning grounds to spawn, the flood peak regulation-and-control indexes of the remaining 11 spawning grounds are raised by 12%, and the water temperature window period from June 26th to June 29th is reselected to implement the precise regulation-and-control after the second flood peak. After the secondary flood peak passes through the spawning grounds, the fish information module 32 analyzes a monitored result which shows that a large-scale drifting fish-egg phenomenon is monitored at the downstream of 8 newly-increased spawning grounds, and the number of the parent fishes in the spawning grounds is decreased to 30% or below before the flood peak, which indicates that most of the target fishes have completed a spawning process and left the spawning grounds. A post-spawning precise regulation-and-control scheme is switched to a fish-egg drifting scheme. The relatively stable discharge process of the reservoir lasts for 5-7 days to guarantee flow velocity conditions required for the drifting and development of the fish-eggs.

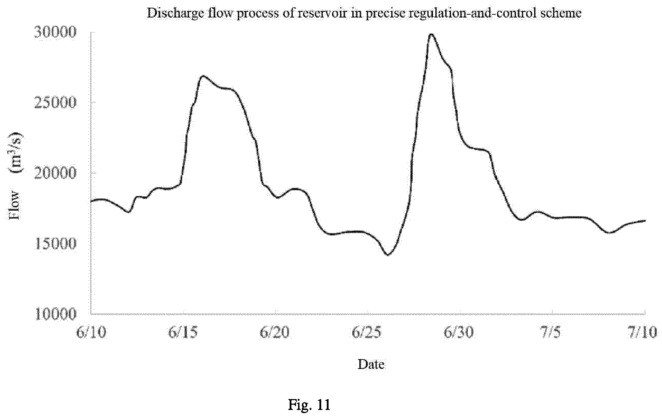

Fig. 11 shows a discharge flow process of a precise regulation-and-control reservoir for propagation of the drifting egg fishes this time. A flow process before June 15th is the precise regulation-and-control for migration, a flood peak process from June 16th to June 20th is the precise regulation-and-control for first spawning, a flood peak process from June 27th to June 30th is the precise regulation-and-control for second spawning, and a flow process after July 1st is used for guaranteeing the smooth drifting and development of a second batch of fish-eggs.

It should be understood that the steps in the process diagrams in Fig. 5, Fig. 7 and Fig. 8 are displayed in sequence as indicated by arrows, however, these steps are not necessarily performed in an order indicated by the arrows. Unless explicitly stated herein, there is no strict order restriction on the performing of these steps, and these steps can be performed in other orders. Moreover, at least one part of steps in Fig. 5, Fig. 7 and Fig. 8 may include a plurality of steps or stages which are not necessarily performed at the same moment, but can be performed at different moments, these steps or stages are not necessarily performed sequentially, but can be performed in turn or alternately with other steps or at least parts of the steps or stages in other steps.

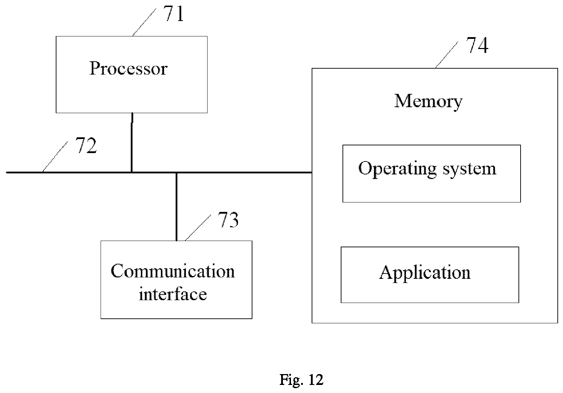

As shown in Fig. 12 which is a schematic structural diagram of an electronic device according to an optional embodiment of the present invention, this electronic device may be a part of a precise regulation-and-control system for propagation of the drifting egg fishes. As shown in Fig. 12, the electronic device may include: at least one processor 71 such as a CPU (Central Processing Unit), at least one communication interface 73, a memory 74 and at least one communication bus 72. The communication bus 72 is used for achieving connection and communication among these components. The communication interface 73 may include a display and a keyboard and may further include a standard wired interface and a wireless interface. The memory 74 may be a high-speed RAM (Random Access Memory) or a non-volatile memory such as at least one magnetic disk memory. Optionally, the memory 74 may be further a storage apparatus located on a position away from the foregoing processor 71. The processor 71 may be combined with the precise regulation-and-control system for propagation of the drifting egg fishes in Fig. 1, applications are stored in the memory 74, and the processor 71 calls a program code stored in the memory 74 to perform steps of any one method as mentioned above.

The communication bus 72 may be a peripheral component interconnect (PCI for short) bus or an extended industry standard architecture (EISA for short) bus, etc. The communication bus 72 may be divided into an address bus, a data bus, a control bus, etc. For facilitating expression, there is only one thick line for expression in Fig. 12, but it does not mean that there is only one bus or one type of bus.

The memory 74 may include a volatile memory such as a random-access memory (RAM for short); the memory may also include a non-volatile memory such as a flash memory, a hard disk drive (HDD for short) or a solid-state drive (SSD for short); and the memory 74 may further include combinations of the above-mentioned kinds of memories.

The processor 71 may be a central processing unit (CPU), a network processor (NP for short) or a combination of the CPU and the NP.

The processor 71 may further include a hardware chip. The above-mentioned hardware chip may be an application-specific integrated circuit (ASIC for short), a programmable logic device (PLD for short), or a combination thereof. The above-mentioned PLD may be a complex programmable logic device (CPLD for short), a field-programmable gate array (FPGA for short), a generic array logic (GAL for short) or any combinations thereof.

Optionally, the memory 74 is further used for storing a program instruction. The processor 71 can call the program instruction to implement the precise regulation-and-control system for propagation of the drifting egg fishes as shown in the above-mentioned embodiment of the present application.

An embodiment of the present invention further provides a non-transient computer storage medium storing a computer executable instruction thereon, and the computer executable instruction can be used for executing the precise regulation-and-control system for propagation of the drifting egg fishes in above-mentioned any method embodiments. The storage medium may be a diskette, an optical disk, a read-only memory (ROM), a random access memory (RAM), a flash memory, a hard disk drive (HDD for short) or a solid-state drive (SSD), etc.; and the storage medium may further include combinations of the above-mentioned kinds of memories.

Although the embodiments of the present invention have been described in conjunction with the accompanying drawings, various modifications and variations may be made by the skilled in the art without departing from the scope of the present invention as defined by the appended claims.

**Claims**

1. A precise regulation-and-control system for propagation of drifting egg fishes, wherein

the system comprises a habitat monitoring component, a fish perception component, an information fusion component and a regulation-and-control component, wherein the habitat monitoring component is connected to the fish perception component, the fish perception component is connected to the information fusion component, and the regulation-and-control component is connected to the information fusion component;
the habitat monitoring component is configured to acquire habitat factor data of target fishes and transmit the habitat factor data to the fish perception component;
the fish perception component is configured to acquire target fish information, receive the habitat factor data transmitted by the habitat monitoring component and transmit the target fish information and the habitat factor data to the information fusion component;
the information fusion component is configured to receive meteorological and hydrological data, the habitat factor data and the target fish information and generate an environmental biological fusion data set according to the meteorological and hydrological data, the habitat factor data and the target fish information;
the information fusion component is further configured to determine, according to the environmental biological fusion data set, spawning grounds for the target fishes to spawn, and determine a start date when the target fishes start to spawn and a first day-to-day water temperature change rate of each spawning ground within a preset period of time starting from the start date;
the regulation-and-control component is configured to generate a precise data set for migration regulation-and-control and a precise regulation-and-control parameter set for stimulative spawning regulation-and-control according to the start date and the first day-to-day water temperature change rate of each spawning ground within the preset period of time starting from the start date; generate a first precise regulation-and-control parameter and a second precise regulation-and-control parameter of a reservoir gate according to the precise data set for migration regulation-and-control and the precise regulation-and-control parameter set for stimulative spawning regulation-and-control; and after the target fishes spawn, generate, according to spawning situations of the target fishes, a precise regulation-and-control scheme meeting a fish-egg hatching condition;
wherein the step of generating an environmental biological fusion data set according to the meteorological and hydrological data, the habitat factor data and the target fish information comprises:

performing spatial interpolation on the meteorological and hydrological data and the habitat factor data which are discretely distributed to obtain an environmental data set in spatial and temporal continuous distribution within a spawning area; and
establishing a relationship between the target fish information and the environmental data set according to the environmental data set to generate the environmental biological fusion data set;
wherein the step of determining a start date when the target fishes start to spawn and a first day-to-day water temperature change rate of each spawning ground within a preset period of time starting from the start date comprises:

fitting a daily change curve of a distribution number of the target fishes in each of the spawning grounds according to the environmental biological fusion data set;
determining an inflexion time point corresponding to the daily change curve according to the daily change curve, and determining, according to the inflexion time point and developmental situations of the target fishes, the start date when the target fishes start to spawn; and
acquiring the water temperature, air temperature, water area, water volume, inflow heat flux and outflow heat flux of each of the spawning grounds according to the environmental biological fusion data set, and calculating the first day-to-day water temperature change rate of each spawning ground within the preset period of time starting from the start date,
wherein the step of determining, according to the environmental biological fusion data set, spawning grounds for the target fishes to spawn comprises:

parsing the environmental biological fusion data set, determining whether a phenomenon that the number of the target fishes is continuously increasing occurs stably at all geographic positions within a preset time, determining each of the spawning grounds in combination with a topography of each of the geographic positions, and marking each of the spawning grounds;

wherein the step of generating a precise data set for migration regulation-and-control according to the start date and the first day-to-day water temperature change rate of each spawning ground within the preset period of time starting from the start date comprises:

generating, according to the start date and the first day-to-day water temperature change rate, multiple sets of alternative migration regulation-and-control schemes based on the condition that a preset requirement is satisfied; and

determining the precise data set for migration regulation-and-control from the multiple sets of alternative migration regulation-and-control schemes according to a preset migration requirement;

wherein the step of generating a precise regulation-and-control parameter set for stimulative spawning regulation-and-control according to the start date and the first day-to-day water temperature change rate of each spawning ground within the preset period of time starting from the start date comprises:

generating, according to the start date and the first day-to-day water temperature change rate, multiple sets of alternative spawning regulation-and-control schemes based on the condition that a preset requirement is satisfied; and

determining the precise regulation-and-control parameter set for stimulative spawning regulation-and-control from the multiple sets of alternative spawning regulation-and-control schemes according to a preset spawning requirement.

2. The system of claim 1, wherein the regulation-and-control component is further configured to acquire the decrease number of the target fishes in each of the spawning grounds after a flood peak; determine, according to the decrease number of the target fishes in each of the spawning grounds, whether a first preset number of target fishes in each of the spawning grounds spawn successfully; and if the number of the spawning grounds in which the first preset number of target fishes spawn successfully is less than or equal to a second preset number, generate a second regulation-and-control scheme;

wherein the step of generating a second regulation-and-control scheme comprises:

generating a target regulation-and-control data set according to the precise regulation-and-control parameter set for stimulative spawning regulation-and-control;

removing the spawning grounds in which the first preset number of target fishes spawn successfully, and acquiring the remaining spawning grounds;

calculating a second day-to-day water temperature change rate corresponding to each of the remaining spawning grounds within the preset period of time starting from the start date; the second day-to-day water temperature change rate being calculated in a way similar to a calculation method for the first day-to-day water temperature change rate; and

generating a third precise regulation-and-control parameter of the reservoir gate according to the target regulation-and-control data set and the second day-to-day water temperature change rate.

3. The system of claim 1, wherein the habitat monitoring component comprises multiple sets of measuring units, each set of the measuring units comprises an underwater vehicle, a propeller, a positioning system, a temperature probe, a water level probe and a data and charging module; wherein

the underwater vehicle is equipped with a battery as a power source and is internally provided with a storage chip for temporarily storing measured data;

the propeller is configured to provide kinetic energy for the underwater vehicle to cruise and hover underwater;

the positioning system is configured to perform device positioning and navigation;

the temperature probe is configured to measure a temperature of a water body;

the water level probe is configured to measure water depth data; and

the data and charging module is configured to upload the measured data and be connected to a charging power supply.

4. The system of claim 3, wherein the fish perception component comprises multiple sets of fixed monitoring units, each set of fixed monitoring units comprises an anchoring apparatus, a power supply apparatus, a data and power supply module, a first photographing apparatus, a second photographing apparatus and a probe; wherein

the anchoring apparatus is configured to anchor the fixed monitoring units;
the power supply apparatus is configured to supply power to a device;
the data and power supply module is configured to receive the habitat factor data uploaded by the measuring units in the habitat monitoring component, supply power to each of the measuring units and upload the habitat factor data and the target fish information to the information fusion component;
the first photographing apparatus and the second photographing apparatus are respectively configured to monitor daytime and nighttime underwater high-definition images; and
the probe is configured to detect a density of the target fishes in a surrounding water body.

**Patentansprüche**

1. Präzises Regulierungs- und Steuerungssystem zur Ausbreitung von Wanderfischen, wobei

das System eine Lebensraumüberwachungskomponente,
eine Fischwahrnehmungskomponente,
eine Informationsfusionskomponente und eine Regulierungs- und Steuerungskomponente umfasst, wobei die Lebensraumüberwachungskomponente mit der Fischwahrnehmungskomponente verbunden ist, die Fischwahrnehmungskomponente mit der Informationsfusionskomponente verbunden ist, und die Regulierungs- und Steuerungskomponente
mit der Informationsfusionskomponente verbunden ist;

die Lebensraumüberwachungskomponente
konfiguriert ist, um Lebensraumfaktordaten von

Zielfischen zu erfassen und die Lebensraumfaktordaten an die Fischwahrnehmungskomponente zu übertragen;

die Fischwahrnehmungskomponente
konfiguriert ist, um Zielfischinformationen zu erfassen,

die von der Lebensraumüberwachungskomponente übertragenen Lebensraumfaktordaten zu empfangen und die Zielfischinformationen und die Lebensraumfaktordaten an die Informationsfusionskomponente zu übertragen;

die Informationsfusionskomponente
konfiguriert ist, um meteorologische und

hydrologische Daten, die Lebensraumfaktordaten und die Zielfischinformationen zu empfangen und einen umweltbiologischen Fusionsdatensatz gemäß den meteorologischen und hydrologischen Daten, den Lebensraumfaktordaten und den Zielfischinformationen zu erzeugen;

die Informationsfusionskomponente
ferner konfiguriert, um gemäß
dem umweltbiologischen Fusionsdatensatz, Laichplätze zum Laichen der Zielfische zu bestimmen, und ein Anfangsdatum, an dem die Zielfische zu laichen beginnen, und eine erste tägliche Wassertemperaturänderungsrate von jedem Laichplatz innerhalb einer voreingestellten Zeitdauer ab dem Anfangsdatum zu bestimmen;
die Regulierungs- und Steuerungskomponente
konfiguriert ist, um einen präzisen Datensatz für

Migrationsregulierung und -steuerung und einen präzisen Regulierungs- und Steuerungsparametersatz für stimulierende Laichregulierung und -steuerung gemäß dem Anfangsdatum und der ersten täglichen Wassertemperaturänderungsrate von jedem Laichplatz innerhalb einer voreingestellten Zeitdauer ab dem Anfangsdatum zu erzeugen; einen ersten präzisen Regulierungs- und Steuerungsparameter und einen zweiten präzisen Regulierungs- und Steuerungsparameter eines Beckentors gemäß dem präzisen Datensatz für Migrationsregulierung und -steuerung und dem präzisen Regulierungs- und Steuerungsparametersatz für stimulierende Laichregulierung und -steuerung zu erzeugen; und nachdem die Zielfische gelaicht haben, je nach Laichsituation der Zielfische ein präzises Regulierungs- und Steuerungsschema zu erzeugen, das die Fischei-Schlüpfbedingungen erfüllt;

wobei der Schritt eines Erzeugens eines umweltbiologischen Fusionsdatensatzes gemäß den meteorologischen und hydrologischen Daten, den Lebensraumfaktordaten und den Zielfischinformationen Folgendes umfasst:

Durchführen einer räumlichen Interpolation der meteorologischen und hydrologischen Daten und der Lebensraumfaktordaten, die separat verteilt sind, um einen Umweltdatensatz in räumlich und zeitlich kontinuierlicher Verteilung innerhalb eines Laichgebiets zu erlangen; und

Herstellen einer Beziehung zwischen den Zielfischinformationen und dem Umweltdatensatz gemäß dem Umweltdatensatz, um den biologischen Umweltfusionsdatensatz zu erzeugen;

wobei der Schritt eines Bestimmens eines Anfangsdatums, an dem die Zielfische zu laichen beginnen, und einer ersten täglichen Wassertemperaturänderungsrate von jedem Laichplatz innerhalb einer vorgegebenen Zeitdauer ab dem Anfangsdatum Folgendes umfasst:

Anpassen einer täglichen Änderungskurve einer Verteilungszahl der Zielfische in jedem der Laichgebiete gemäß dem umweltbiologischen Fusionsdatensatz;

Bestimmen eines Wendepunktes entsprechend der täglichen Änderungskurve gemäß der täglichen Änderungskurve, und Bestimmen des Anfangsdatums, an dem die Zielfische zu laichen beginnen, gemäß dem Wendepunkt und den Entwicklungssituationen der Zielfische; und

Erfassen der Wassertemperatur, der Lufttemperatur, der Wasserfläche, des Wasservolumens, des einfließenden Wärmestroms und des ausfließenden Wärmestroms von jedem Laichplatz gemäß dem umweltbiologischen Fusionsdatensatz, und Berechnen der ersten täglichen Wassertemperaturänderungsrate von jedem Laichplatz innerhalb des vorgegebenen Zeitraums ab dem Anfangsdatum,

wobei der Schritt eines Bestimmens, gemäß dem umweltbiologischen Fusionsdatensatz, von Laichplätzen zum Laichen der Zielfische Folgendes umfasst:

Analysieren des umweltbiologischen Fusionsdatensatzes, Bestimmen, ob ein Phänomen, dass die Anzahl der Zielfische kontinuierlich zunimmt, an allen geografischen Positionen innerhalb einer vorgegebenen Zeit stabil auftritt, Bestimmen von jedem der Laichgebiete in Kombination mit einer Topografie von jeder der geografischen Positionen und Markieren von jedem der Laichgebiete;

wobei der Schritt eines Erzeugens eines präzisen Datensatzes für die Migrationsregulierung und -steuerung gemäß dem Anfangsdatum und der ersten täglichen Wassertemperaturänderungsrate von jedem Laichplatz innerhalb der voreingestellten Zeitdauer ab dem Anfangsdatum Folgendes umfasst:

Erzeugen, gemäß dem Anfangsdatum und der ersten täglichen Wassertemperaturänderungsrate, mehrerer Sätze alternativer Migrationsregulierungs- und -steuerungsschemata basierend auf der Bedingung, dass eine voreingestellte Anforderung erfüllt ist; und

Bestimmen des präzisen Datensatzes für die Migrationsregulierung und -steuerung aus den mehreren Sätzen alternativer Migrationsregulierungs- und -steuerungsschemata gemäß einer voreingestellten Migrationsanforderung;

wobei der Schritt eines Erzeugens eines präzisen Regulierungs- und Steuerungsparametersatzes für stimulierende Laichregulierung und -steuerung gemäß dem Anfangsdatum und der ersten täglichen Wassertemperaturänderungsrate von jedem Laichplatz innerhalb einer voreingestellten Zeitdauer ab dem Anfangsdatum Folgendes umfasst:

Erzeugen, gemäß dem Anfangsdatum und der ersten täglichen Wassertemperaturänderungsrate, mehrerer Sätze alternativer Laichregulierungs- und -steuerungsschemata basierend auf der Bedingung, dass eine voreingestellte Anforderung erfüllt ist; und

Bestimmen des präzisen Regulierungs- und Steuerungsparametersatzes für stimulierende Laichregulierung und -steuerung aus den mehreren Sätzen alternativer Laichregulierungs- und -steuerungsschemata gemäß einer voreingestellten Laichanforderung.

**2.** System nach Anspruch 1, wobei die Regulierungs- und Steuerungskomponente ferner konfiguriert ist, um die abnehmende Anzahl der Zielfische in jedem der Laichgebiete nach einer Hochwasserspitze zu erfassen; gemäß der abnehmenden Anzahl der Zielfische in jedem der Laichgebiete zu bestimmen, ob eine erste voreingestellte Anzahl von Zielfischen in jedem der Laichgebiete erfolgreich laicht; und wenn die Anzahl der Laichgebiete, in denen die erste voreingestellte Anzahl von Zielfischen erfolgreich laicht, kleiner als oder gleich wie eine zweite voreingestellte Anzahl ist, ein zweites Regulierungs- und Steuerungsschema zu erzeugen;

wobei der Schritt eines Erzeugens eines zweiten Regulierungs- und Steuerungsschemas Folgendes umfasst:

Erzeugen eines Ziel-Regulierungs- und Steuerungsdatensatzes gemäß dem präzisen Regulierungs- und Steuerungsparametersatz für stimulierende Laichregulierung und - steuerung;

Entfernen der Laichgebiete, in denen die erste voreingestellte Anzahl von Zielfischen erfolgreich laicht, und Erfassen der übrigen Laichgebiete;

Berechnen einer zweiten täglichen Wassertemperatur-Änderungsrate, die jedem der verbleibenden Laichgründe innerhalb der voreingestellten Zeitdauer ab dem Anfangsdatum entspricht; wobei die zweite tägliche Wassertemperaturänderungsrate auf ähnliche Weise wie ein Berechnungsverfahren für die erste tägliche Wassertemperaturänderungsrate berechnet wird; und

Erzeugen eines dritten präzisen Regulierungs- und Steuerungsparameters des Beckentors gemäß dem Ziel-Regulierungs- und -steuerungsdatensatz und der zweiten täglichen Wassertemperaturänderungsrate.

3. System nach Anspruch 1, wobei die Lebensraumüberwachungskomponente mehrere Sätze

von Messeinheiten umfasst, wobei jeder Satz der Messeinheiten ein Unterwasserfahrzeug, einen Propeller, ein Positionierungssystem, eine Temperatursonde, eine Wasserstandsonde und ein Daten- und Lademodul umfasst; wobei

das Unterwasserfahrzeug ist mit einer Batterie als Energiequelle ausgestattet ist und intern über einen Speicherchip zur Zwischenspeicherung von Messdaten verfügt;

der Propeller konfiguriert ist, um kinetische Energie für das Unterwasserfahrzeug bereitzustellen, um unter Wasser zu fahren und zu schweben;

das Positionierungssystem konfiguriert ist, um Positionierung und Navigation der Vorrichtung durchzuführen;

die Temperatursonde konfiguriert ist, um die Temperatur eines Wasserkörpers zu messen;

die Wasserstandsonde konfiguriert ist, um Wassertiefendaten zu messen; und

das Daten- und Lademodul konfiguriert ist, um die gemessenen Daten hochzuladen und mit einer Ladestromversorgung verbunden zu sein.

4. System nach Anspruch 3, wobei die Fischwahrnehmungskomponente mehrere Sätze von

ortsfesten Überwachungseinheiten umfasst, wobei jeder Satz ortsfester Überwachungseinheiten eine Verankerungsvorrichtung, eine Stromversorgungsvorrichtung, ein Daten- und Stromversorgungsmodul, eine erste Fotografiervorrichtung, eine zweite Fotografiervorrichtung und eine Sonde umfasst; wobei

die Verankerungsvorrichtung konfiguriert ist, um die ortsfesten Überwachungseinheiten zu verankern;

die Stromversorgungsvorrichtung konfiguriert ist, um eine Vorrichtung mit Strom zu versorgen;

das Daten- und Stromversorgungsmodul konfiguriert ist, um die von den Messeinheiten in der Lebensraumüberwachungskomponente hochgeladenen Lebensraumfaktordaten zu empfangen, Strom zu

jeder der Messeinheiten zuzuführen und die Lebensraumfaktordaten und die Zielfischinformationen in die Informationsfusionskomponente hochzuladen;

die erste Fotografiervorrichtung und die zweite Fotografiervorrichtung jeweils konfiguriert sind, um hochauflösende Unterwasserbilder bei Tag und bei Nacht zu überwachen; und

die Sonde konfiguriert ist, um eine Dichte der Zielfische in einem umgebenden Wasserkörper zu erfassen.

## Revendications

1. Système de régulation et de contrôle précis pour la propagation de poissons migrateurs, dans lequel

le système comprend un composant de surveillance de l'habitat,
un composant de perception des poissons,
un composant de fusion d'informations et un composant de régulation et de contrôle, dans lequel le composant de surveillance de l'habitat est connecté au composant de perception des poissons, le composant de perception des poissons est connecté au composant de fusion d'informations, et le composant de régulation et de contrôle
est connecté au composant de fusion d'informations ;

le composant de surveillance de l'habitat
est configuré pour acquérir des données sur les facteurs d'habitat des

poissons cibles et transmettre les données relatives aux facteurs d'habitat au composant de perception des poissons ;

le composant de perception des poissons
est configuré pour acquérir des informations sur les poissons cibles,

recevoir les données relatives aux facteurs d'habitat transmises par le composant de surveillance de l'habitat et transmettre les informations sur les poissons cibles et les données relatives aux facteurs d'habitat au composant de fusion d'informations ;

le composant de fusion d'informations
est configuré pour recevoir des données météorologiques et

hydrologiques, les données relatives aux facteurs d'habitat et les informations sur les poissons cibles, et générer un ensemble de données de fusion biologiques environnementales en fonction des données météorologiques et hydrologiques, des données relatives aux facteurs d'habitat et des informations sur les poissons cibles ;

le composant de fusion d'informations
est en outre configuré pour déterminer, en fonction de
l'ensemble de données de fusion biologiques environnementales, les frayères où les poissons cibles se reproduisent, et déterminer une date de début de la reproduction des poissons cibles et un premier taux de changement quotidien de la température de l'eau de chaque frayère au cours d'une période prédéfinie à partir de la date de début ;
le composant de régulation et de contrôle
est configuré pour générer un ensemble de données précises pour

la régulation et le contrôle de la migration et un ensemble de paramètres précis de régulation et de contrôle pour la régulation et le contrôle stimulants du frai en fonction de la date de début et du premier taux de changement quotidien de la température de l'eau de chaque frayère au cours de la période prédéfinie à partir de la date de début ; la génération d'un premier paramètre précis de régulation et de contrôle et d'un deuxième paramètre précis de régulation et de contrôle d'une vanne de réservoir en fonction de l'ensemble de données précises pour la régulation et le contrôle de la migration et de l'ensemble de paramètres précis de régulation et de contrôle pour la régulation et le contrôle stimulants du frai ; et après le frai des poissons cibles, la génération, en fonction des situations de frai des poissons cibles, d'un schéma précis de régulation et de contrôle répondant à une condition d'éclosion des œufs de poisson ;
dans lequel l'étape de génération d'un ensemble de données de fusion biologiques environnementales en fonction des données météorologiques et hydrologiques, des données relatives aux facteurs d'habitat et des informations sur les poissons cibles comprend :

la réalisation d'une interpolation spatiale sur les données météorologiques et hydrologiques et les données relatives aux facteurs d'habitat qui sont distribuées de manière discrète afin d'obtenir un ensemble de données environnementales dans une distribution spatiale et temporelle continue au sein d'une frayère ; et l'établissement d'une relation entre les informations sur les poissons cibles et l'ensemble de données environnementales en fonction de l'ensemble de données environnementales afin de générer l'ensemble de données de fusion biologiques environnementales ;
dans lequel l'étape de détermination d'une date de début du frai des poissons cibles et d'un premier taux de changement quotidien de la température de l'eau de chaque frayère au cours d'une période de temps prédéfinie à partir de la date de début comprend :

l'ajustement d'une courbe de variation journalière d'un nombre de distribution des poissons cibles dans chacune des frayères en fonction de l'ensemble des données de fusion biologiques et environnementales ;

la détermination d'un point d'inflexion dans le temps correspondant à la courbe de variation journalière en fonction de la courbe de variation journalière, et la détermination, en fonction du point d'inflexion dans le temps et des situations de développement des poissons cibles, de la date de début de frai des poissons cibles ; et

l'acquisition de la température de l'eau, de la température de l'air, de la superficie d'eau, du volume d'eau, du flux thermique entrant et du flux thermique sortant de chacune des frayères en fonction de l'ensemble de données de fusion biologiques environnementales, et le calcul du premier taux de variation journalière de la température de l'eau de chaque frayère au cours de la période prédéfinie à partir de la date de début,

dans lequel l'étape de détermination, en fonction de l'ensemble de données de fusion biologiques environnementales, des frayères pour les poissons cibles comprend :

l'analyse de l'ensemble de données de fusion biologiques environnementales, la détermination si un phénomène d'augmentation continue du nombre de poissons cibles se produit de manière stable à toutes les positions géographiques dans un délai prédéfini, la détermination de chacune des frayères en combinaison avec une topographie de chacune des positions géographiques, et le marquage de chacune des frayères ;

dans lequel l'étape de génération d'un ensemble de données précises pour la régulation et le contrôle de la migration en fonction de la date de début et du premier taux de variation journalière de la température de l'eau de chaque frayère au cours de la période prédéfinie à partir de la date de début comprend :

la génération, en fonction de la date de début et du premier taux de variation journalière de la température de l'eau, de plusieurs ensembles de schémas alternatifs de régulation et de contrôle de la migration fondés sur la condition qu'une exigence prédéfinie soit satisfaite ; et

la détermination de l'ensemble de données précises pour la régulation et le contrôle de la migration parmi les multiples ensembles de schémas alternatifs de régulation et de contrôle de la migration, en fonction d'une exigence de migration prédéfinie ;

dans lequel l'étape de génération d'un ensemble précis de paramètres de régulation et de contrôle pour la régulation et le contrôle stimulants du frai en fonction de la date de début et du premier taux de variation journalière de la température de l'eau de chaque frayère au cours de la période prédéfinie à partir de la date de début comprend :

la génération, en fonction de la date de début et du premier taux de variation journalière de la température de l'eau, de plusieurs ensembles de schémas alternatifs de régulation et de contrôle du frai fondés sur la condition qu'une exigence prédéfinie soit satisfaite ; et

la détermination de l'ensemble précis de paramètres pour la régulation et le contrôle stimulants du frai parmi les multiples ensembles de schémas alternatifs de régulation et de contrôle du frai, en fonction d'une exigence de frai prédéfinie.

2. Système selon la revendication 1, dans lequel le composant de régulation et de contrôle est en outre configuré pour acquérir le nombre de diminution des poissons cibles dans chacune des frayères après un pic d'inondation ; déterminer, en fonction du nombre de diminution des poissons cibles dans chacune des frayères, si un premier nombre prédéfini de poissons cibles dans chacune des frayères réussit à frayer ; et si le nombre de frayères dans lesquelles le premier nombre prédéfini de poissons cibles réussit à frayer est inférieur ou égal à un second nombre prédéfini, générer un second schéma de régulation et de contrôle ;

dans lequel l'étape de génération d'un second schéma de régulation et de contrôle comprend :

la génération d'un ensemble de données de régulation et de contrôle cible en fonction de l'ensemble de paramètres précis de régulation et de contrôle pour la régulation et le contrôle stimulants du frai ;

l'élimination des frayères dans lesquelles le premier nombre prédéfini de poissons cibles réussit à frayer et acquérir les frayères restantes ;

le calcul d'un second taux de variation journalière de la température de l'eau correspondant à chacune des frayères restantes dans la période de temps prédéfinie à partir de la date de début ; le second taux de variation journalière de la température de l'eau étant calculé d'une manière similaire à un procédé de calcul pour le premier taux de variation journalière de la température de l'eau ; et

la génération d'un troisième paramètre précis de régulation et de contrôle de la vanne du réservoir en fonction de l'ensemble de données de régulation et de contrôle cible et du second taux de variation journalière de la température de l'eau.

3. Système selon la revendication 1, dans lequel le composant de surveillance de l'habitat comprend plusieurs ensembles

d'unités de mesure, chaque ensemble des unités de mesure comprend un véhicule sous-marin, une hélice, un système de positionnement, une sonde de température, une sonde de niveau d'eau et un module de données et de chargement ; dans lequel

le véhicule sous-marin est équipé d'une batterie comme source d'énergie et dispose à l'intérieur d'une puce de stockage pour stocker temporairement les données mesurées ;

l'hélice est configurée pour fournir de l'énergie cinétique au véhicule sous-marin afin de lui permettre de naviguer et de se maintenir stationnaire sous l'eau ;

le système de positionnement est configuré pour effectuer le positionnement et la navigation du dispositif ;

la sonde de température est configurée pour mesurer une température d'une masse d'eau ;

la sonde de niveau d'eau est configurée pour mesurer les données relatives à la profondeur de l'eau ; et

le module de données et de chargement est configuré pour télécharger les données mesurées et être connecté à une alimentation de chargement.

4. Système selon la revendication 3, dans lequel le composant de perception des poissons comprend plusieurs ensembles

d'unités de surveillance fixes, chaque ensemble d'unités de surveillance fixes comprend un appareil d'ancrage, un appareil d'alimentation électrique, un module de données et d'alimentation électrique, un premier appareil photographique, un second appareil photographique et une sonde ; dans lequel

l'appareil d'ancrage est configuré pour ancrer les unités de surveillance fixes ;

l'appareil d'alimentation électrique est configuré pour alimenter un dispositif ;

le module de données et d'alimentation électrique est configuré pour recevoir les données relatives aux facteurs d'habitat téléchargées par les unités de mesure dans le composant de surveillance de l'habitat, alimenter

chacune des unités de mesure et télécharger les données relatives aux facteurs d'habitat et les informations sur les poissons cibles vers le composant de fusion d'informations ;

le premier appareil photographique et le second appareil photographique sont respectivement configurés pour surveiller les images sous-marines haute définition de jour et de nuit ; et

la sonde est configurée pour détecter une densité des poissons cibles dans une masse d'eau environnante.

| Habitat monitoring component 1 | Fish perception component 2 | Information fusion component 3 | Regulation-and-control component 4 |

Fig. 1

Fig. 2

Fig. 3

Fig. 4

performing spatial interpolation on the meteorological and hydrological data and the habitat factor data which are discretely distributed to obtain an environmental data set in spatial and temporal continuous distribution within a spawning area

S41

establishing a relationship between the target fish information and the environmental data set according to the environmental data set to generate the environmental biological fusion data set

S42

parsing the environmental biological fusion data set, determining whether a phenomenon that the number of the target fishes is continuously increasing occurs stably at all geographic positions within a preset time, determining each of the spawning grounds in combination with a topography of each of the geographic positions, and marking each of the spawning grounds

S43

fitting a daily change curve of a distribution number of the target fishes in each of the spawning grounds according to the environmental biological fusion data set

S44

determining an inflexion time point corresponding to the daily change curve according to the daily change curve, and determining the start date when the target fishes start to spawn according to the inflexion time point and developmental situations of the target fishes

S45

acquiring the water temperature, air temperature, water area, water volume, inflow heat flux and outflow heat flux of each of the spawning grounds according to the environmental biological fusion data set, and calculating the first day-by-day water temperature change rate of the water temperature of each of the spawning grounds within the preset period of time starting from the start date

S46

Fig. 5

Fig. 6

generating a plurality of groups of candidate migration regulation-and-control schemes according to the start date and the first day-by-day water temperature change rate under the condition that a preset requirement is satisfied

S51

determining the precise data set for migration regulation-and-control from the plurality of groups of candidate migration regulation-and-control schemes according to a preset migration requirement

S52

generating a plurality of groups of candidate spawning regulation-and-control schemes according to the start date and the first day-by-day water temperature change rate under the condition that a preset requirement is satisfied

S53

determining the precise regulation-and-control parameter set for stimulative spawning regulation-and-control from the plurality of groups of candidate spawning regulation-and-control schemes according to a preset spawning requirement

S54

Fig. 7

generating a target regulation-and-control data set
according to the precise regulation-and-control
parameter set for stimulative spawning regulation-and-
control

S61

removing the spawning grounds in which the first preset
number of target fishes spawn successfully, and
acquiring the remaining spawning grounds

S62

calculating a second day-by-day water temperature
change rate corresponding to each of the remaining
spawning grounds within the preset period of time
starting from the start date

S63

generating a third precise regulation-and-control
parameter of the reservoir gate according to the target
regulation-and-control data set and the second day-by-
day water temperature change rate

S64

Fig. 8

Fig. 9

Fig. 10

Fig. 11

71

Processor

74

Memory

72

Operating system

73

Communication
interface

Application

Fig. 12

**REFERENCES CITED IN THE DESCRIPTION**

**Patent documents cited in the description**

- CN 109447848 A
- CN 106407671 A
- CN 112502088 A
- WO 2021238567 A1